# EUROPEAN PATENT APPLICATION

(11) **EP 4 811 079 A1**
(43) Date of publication of application: **23.09.2026**
(21) Application number: 25222808.5
(22) Date of filing: 12.12.2025
(51) Int. Cl.: G06F 1/3296, G06F 1/3206, G06F 1/3234

(54) **MOVING PEAK PROCESSOR POWER LIMIT**

(30) Priority: 17.03.2025 US 202519081635
(71) Applicant: Intel Corporation, Santa Clara, CA 95054 (US)
(72) Inventor: Pang, Sze Geat, 11900 Gelugor (MY); Resch, Joshua, Portland, OR 97229 (US); Lehwalder, Philip, Hillsboro, OR 97124 (US); Singh, Jagadish, 560037 Bangalore (IN)
(74) Representative: Samson & Partner Patentanwälte mbB

(57) **Abstract**

A processor power limit control scheme that controls the processor power limit value based on a monitored system power for a compute platform that includes the processor.

## Description

### TECHNICAL FIELD

Embodiments relate to the field of processors and more specifically, to the field of managing processor power and performance.

### BRIEF DESCRIPTION OF THE DRAWINGS

The disclosure may best be understood by referring to the following description and accompanying drawings that are used to illustrate embodiments of the invention. In the drawings:
FIG. 1 is a block diagram of a processor system in accordance with some embodiments.
FIG. 2 is a block diagram showing a portion of a processor-based computing platform in accordance with some embodiments.
FIG. 3 is a signal diagram showing how system power limits may be implemented in accordance with some embodiments.
FIG. 4A is a flow diagram showing a routine for implementing a peak processor power control scheme in accordance with some embodiments.
FIG. 4B is a flow diagram showing another, more detailed routine for implementing a peak processor power control scheme in accordance with some embodiments.
FIG. 5 is a schematic diagram of a neural network PID (NN-PID) controller for controlling a maximum peak processor power parameter in accordance with some embodiments.
FIG. 6 illustrates an example computing system.
FIG. 7 illustrates a block diagram of an example processor and/or System on a Chip (SoC) that may have one or more cores and an integrated memory controller.
FIG. 8 is a block diagram illustrating a computing system 800 configured to implement one or more aspects of the examples described herein.
FIG. 9A illustrates examples of a parallel processor.
FIG. 9B illustrates examples of a block diagram of a partition unit.
FIG. 9C illustrates examples of a block diagram of a processing cluster within a parallel processing unit.
FIG. 9D illustrates examples of a graphics multiprocessor in which the graphics multiprocessor couples with the pipeline manager of the processing cluster.
FIGS. 10A-10C illustrate additional graphics multiprocessors, according to examples.
FIG. 11 shows a parallel compute system 1100, according to some examples.
FIGS. 12A-12B illustrate a hybrid logical/physical view of a disaggregated parallel processor, according to examples described herein.
FIG. 13(A) is a block diagram illustrating both an example in-order pipeline and an example register renaming, out-of-order issue/execution pipeline according to examples.
FIG. 13(B) is a block diagram illustrating both an example in-order architecture core and an example register renaming, out-of-order issue/execution architecture core to be included in a processor according to examples.
FIG. 14 illustrates examples of execution unit(s) circuitry, such as execution unit(s) circuitry.
FIG. 15 is a block diagram of a register architecture according to some examples.
FIG. 16 illustrates examples of an instruction format.
FIGS. 17A-17B illustrate thread execution logic including an array of processing elements employed in a graphics processor core according to examples described herein.
FIG. 18 illustrates an additional execution unit, according to an example.
FIG. 19 is a block diagram illustrating a graphics processor instruction formats 1900 according to some examples.
FIG. 20 is a block diagram of another example of a graphics processor.
FIG. 21A is a block diagram illustrating a graphics processor command format according to some examples.
FIG. 21B is a block diagram illustrating a graphics processor command sequence according to an example.
FIG. 22 is a block diagram illustrating the use of a software instruction converter to convert binary instructions in a source ISA to binary instructions in a target ISA according to examples.
FIG. 23 is a block diagram illustrating an IP core development system 2300 that may be used to manufacture an integrated circuit to perform operations according to some examples.

### DETAILED DESCRIPTION

Modern compute devices are often associated with massively parallel processors, hardware accelerators, and high resolution displays. Such hardware improves performance but increases energy consumption, reducing the utility of portable systems dependent on limited-capacity batteries. Therefore, computer architects, hardware manufacturers, and software developers carefully consider performance and energy consumption when designing devices.

The increasing demand for higher performance within a limited power envelope and higher performance per Watt in modern processors necessitates more sophisticated power management solutions. Reactive maximum processor peak power (Ppmx such as PL4 with Intel^{™} systems) is one of the methods used to facilitate a higher Ppmx setting, even during low battery RSoC (relative state of charge) scenarios. This is because peak processor power limits are peak limits, not corresponding to sustained or even somewhat sustained power consumption levels. In the past, to facilitate the highest possible Ppmx limits and at the same time, not exceed damaging or otherwise excessive power levels, a platform supply voltage (Vs) was monitored to detect minimum Vs threshold droop events and then assert a quickly responding processor throttle (e.g., PROCHOT#) to throttle the processor operating frequency to immediately reduce the instantaneous processor power consumption. In response to one or more of these throttle events, the processor's power management framework would then reduce the Ppmx setting to a safer level. Unfortunately, with this approach of responding to voltage droop events, a fast throttle assertion is needed (e.g., within a few µS), and the system's supply needs a relatively large capacitance to hold the voltage above the required minimum allowable Vs level (e.g., above 5.6 or so V) for the needed additional micro-seconds of time for the processor to be able to sufficiently respond to the fast throttle. In turn, this resulted in the processor power management control system to overly reduce the Ppmx setting, not allowing it to go as high as it could be in certain workload/power supply scenarios and thus missing out on improved performance.

It has been appreciated by the inventors that while performance in the case of some platforms that used so-called 1S and 2S battery configurations are limited by the minimum operational system voltage (e.g., 2.5 V or 5.6 V). On the other hand, designs employing higher voltage power source supplies (e.g., with 3s or 4s battery configurations that can provide voltage supplies of 9 V and higher, even when in lower states of charge, are typically instead limited by peak current capabilities of the battery. With this recognition, some embodiments enhance the performance that can be extracted from a given power budget by controlling a defined maximum processor power setting (ppmx) based on a real-time monitored system platform power consumption parameter (e.g., current and/or power). In some embodiments, the Ppmx setting (e.g., PL4 setting for an Intel^{™} processor) may be controlled using a dynamic control loop such as with a NN-PID (neural network proportional integral derivative) based control mechanism. In some embodiments, such control loops may use knowledge of system platform power supply information such as a platform's active power source configuration's (e.g., battery, adaptor, battery with adaptor) total available sustained and peak power capabilities. In some embodiments, it may also, or alternatively, use workload classification information to adjust the control loop's parameters and enhance performance by being able to set a higher Ppmx limit when the power source, as well as workload, conditions allow. In some embodiments, it tracks how often the monitored system power exceeds certain adjustable limits that are below the Ppmx limit. In some embodiments, for suitable workload (e.g., bursty) scenarios, it controls the Ppmx limit, which affects other, lower processor power limits, to be at a level that results in system power exceeding a first, lower limit more often then when it exceeds a second higher limit but without exceeding the second limit too often. This approach can allow the processor to continue operating in high frequency (e.g., turbo) modes for longer durations (e.g., in terms of milli-seconds). In some embodiments, this can happen, for example, when a battery is active in a power source because batteries usually have little trouble in delivering peak current for a longer duration. Moreover, the Ppmx threshold (or limit) can be set higher when it is known that other fail-safes in the platform such as fuel gauge, charger, and/or other VR control module can independently protect the power delivery system.

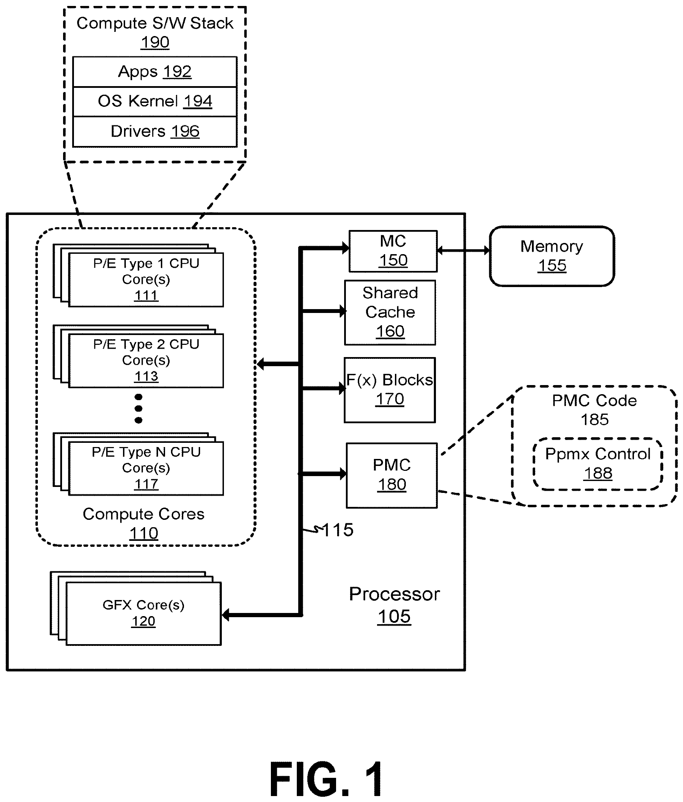

FIG. 1 is a block diagram of a processor in accordance with some embodiments. The processor (e.g., SoC, system on chip) includes one or more processors 105. The processor is also designed to be coupled with memory 155, along with other devices such as user interface peripheral devices, displays, and the like (not shown for simplicity).

The processor 105 generally includes compute (or CPU) cores 110 with associated local cache (not shown), graphics processing core(s) (GFX) 120, also with associated cache (not shown), power management controller circuit (hereinafter referred to as "PMC") 180, various functional (f(x)) blocks 170, shared cache (e.g., last level cache) 160, and memory controller 150, communicatively coupled together through communications fabric 115, which may be implemented with one or more busses, rings, and/or mesh networks, depending upon particular design configurations and objectives.

The PMC 180 includes one or more microcontrollers, state machines and/or other logic for controlling various aspects of the processor 105. For example, it may manage functions such as security, boot configuration, thermal management, and power and performance management including utilized and allocated power. Note that the PMC may also be referred to as a P-unit, a power management unit (PMU), a power control unit (PCU), a system management unit (SMU) a system management controller (SMC), and the like and may include multiple PMCs, PMUs, die management controllers, etc. The PMC executes PMC code 185 which may include multiple separate modules and/or logic to perform these and other functions. Included as part of the PMC is a processor power limit, e.g., max. peak processor power (Ppmx) control loop 188, which may be implemented with software, hardware or a combination of the same. The Ppmx control routine will be discussed further below.

The compute (e.g., CPU) cores 110 may include different core types (or classes) with regard to their design bias toward performance or efficiency. There are N different P/E core types, as shown. For example, P/E type 1 CPU cores (111) may be of a highest performance class, e.g., having floating point and/or other robust execution features but consuming relatively large amounts of power, wile P/E type 2 CPU cores (113) may have slightly lower performance capabilities but be more power efficient. Likewise, the other core types, on down to type N CPU cores (117), may be designed for greater efficiency but with less performance capability. In some embodiments, having these different P/E core types may be referred to as a hybrid processing system implementation. Note that in many implementations, the different P/E type compute cores, while having different power/performance profiles, may have a common instruction set architecture (ISA). In other embodiments, one or some of the different P/E core types may utilize different ISAs relative to the other P/E compute core types, and in some embodiments, the cores may be configured to be the same, or similar, with respect to their size and capabilities.

It should be appreciated that the processor 105 may be implemented in various different manners. For example, it may be implemented on a single die, multiple dies (dielets, chiplets), one or more dies in a common package, or one or more dies in multiple packages. Along these lines, some of these blocks may be located separately on different dies or together on two or more different dies. In some embodiments, however, with multi-die implementations, each die may have its own PMC or PMC instantiation with the same, or more or less, features and responsibilities as the other die PMCs.

Also shown is a compute software stack 190 that may wholly or partially be executed within compute cores 110. Software stack 190 includes applications (Apps) 192, operating system kernel 194, and drivers 196. The OS 194 and drivers 196 may work together with the PMC 180 to manage power and performance (PnP) of the various blocks within SoC system. As will be discussed below, processor 105 may have different features or feature combinations to control processor power to increase performance capabilities while utilizing mechanisms to redress excessive power draw on the platform power delivery source(s).

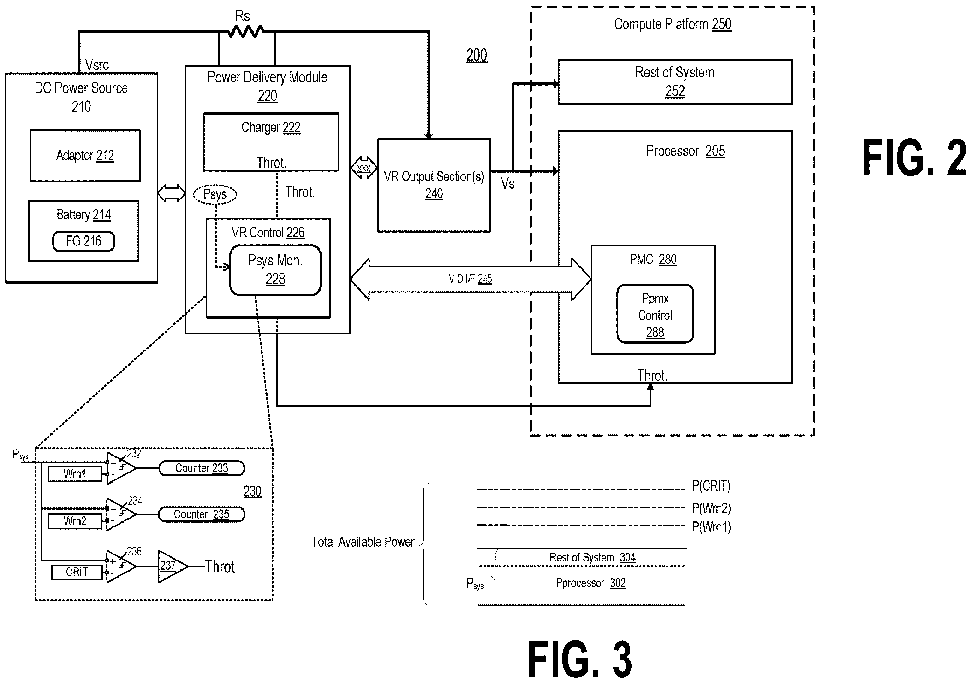

FIG. 2 is a block diagram showing a portion of a processor-based computing platform 200 in accordance with some embodiments. The platform generally includes a DC power source 210, a power delivery control module 220, VR output section(s) 240 and a compute platform 250 coupled together as shown. The DC power source 210 provides a DC (direct current) voltage supply to the power delivery control module (or simply control module) 220 and to the VR output section 240, which is controlled and monitored by control module 220, to provide one or more regulated voltage supplies(Vs) to the compute platform 250. In operation, a processor 205, within the compute platform 250, controls one or more different processor power threshold limits based on system power that is monitored through an interface (e.g., VID interface 245) between the processor and the control module 220. In some embodiments, this can be an effective way to extract additional maximum power bursts from the DC supply 210 without adversely affecting it or causing it to shut down.

The DC power source 210 includes an AC (alternating current) adaptor 212 and one or more batteries 214 to provide a DC power source (Vsrc). In some embodiments, the DC power source may also or alternatively include other DC source devices such as USB supplies, ultra capacitors, photo-voltaic cells, and the like. The battery includes multiple cells that may be in any suitable configuration such as with 2s, 3s, or 4s configurations, providing an output supply (Vs) ranging, e.g., anywhere from 6 to 18 V.

The power source block 210 may also include circuitry (switches, etc.) to control the specific supply sources being coupled to provide the source supply (Vsrc). For example, when the adaptor is not connected to AC power, the battery may be a sole power source. On the other hand, if the battery is damaged or being exclusively charged, the adaptor, alone, may be used. In some embodiments, the adaptor and battery may be used together to simultaneously provide power through the source supply. In this way, increased steady state and peak, or bursty, power may be supplied to the compute platform. In the depicted embodiment, the battery also has a fuel gage (FG) to provide information for the battery such as relatively state of charge (RSoc), peak current capabilities, no-load voltage level, and other operational parameters and limitations. It may also be used to adjust different settings such as maximum allowable peak current from the battery.

The power delivery (PD) module 220 has circuitry to facilitate, in cooperation with the VR output section(s) 240, one or more regulated voltage supplies (Vs) for the compute platform 250. In some embodiments, the PD module includes a charger 222 and./or a VR control circuit 226. Some or all of the PD module functions may be implemented within, external to or both within and external to the charger 222 and/or VR control circuit 226.

The VR output section 240 includes, for example, relatively large passive components such as power FETs (field effect transistors) switches, inductors and capacitors used to implement DC-DC voltage regulators. In addition to switch circuits such as bridge drivers, output inductors, and switch capacitor networks, this may also include output capacitors for smoothing and maintaining an output supply voltage (Vsys). In turn, the PD module 220 includes control circuitry (e.g., pulse width modulators) to control the output circuit components to implement the voltage regulator(s). In some embodiments, the voltage regulators may be configured using buck, boost, buck-boost, switch capacitor, and/or any other suitable combination of voltage regulator architectures. In some embodiments, the PD module 220 may also include one or more additional, stand-alone voltage regulators including switching and/or linear type regulators.

The platform also includes at least one sense element (e.g., sense resistor, Rs, or current loop) to provide the PD module with real-time system current-consumption information. In this way, the PD module can generate a current and/or power signal (Psys) that is indicative of the power currently being consumed by the system. This information through the Psys signal may be shared with circuitry within the PD module, as well as with the processor 205. In some embodiments, the charger 222 may generate the Psys signal as an analog voltage corresponding to the power being consumed. This signal may then be coupled to the VR control circuit 226, which uses it for monitoring and controlling system power consumption, and it also may convert it to a digital signal to be provided to the processor 205, e.g., through the VID interface 245. In other embodiments, the power signal, which may track current, or power, may be provided directly to the processor and/or to other components in the platform.

In operation, as will be discussed further below, the processor uses the Psys information to control its max power limit setting(s) (e.g., Ppmx) as a more direct proxy for controlling processor power, even though the processor only consumes a part (albeit a relatively large part) of the system's overall power. In this way, it's able to push peak power consumption to the edge, knowing that even if it pushes it too high, other failsafe mechanisms in the platform will protect the power source 210 from being over-loaded and thereby prevent damage or power disruption. For example, the charger and/or VR control circuit may have over-current protection circuitry to take instantaneous current-reduction measures when a power source over-current event occurs. For example, the charger 222 can throttle (e.g., through a "Throt" signal) the processor when the battery current is too large. Similarly, the VR control circuit 226 may have circuitry to also trigger the throttle signal when excessive current is being sourced by one or more of the voltage regulators through output section 240. It may also have a less drastic, constant current, capability to provide a constant current that it is able to source for an extended period without shutting down. Note that the battery and adaptor will likely also have their own, independent over-current (and over-temperature) mechanisms, but they usually result in the power source itself shutting down, which from a user experience perspective, is to be avoided.

The charger 222 may be implemented with any suitable circuitry or device. For example, it may be implemented with an off-the-shelf charger chip. In some embodiments, it may include a system power monitor feature to measure and monitor power through sense element (Rs) gaining knowledge of the system power consumption at any given moment. This is derived from the knowledge of the discharge power from the battery path in DC mode of operation and both the battery and adapter path in AC mode of operation. In some embodiments, the Psys value (which may be a scaled value of the current) is delivered as an analog signal to the VR control circuit 226 where it may be converted to voltage) and digitized for the processor to read through the VID interface 245.

The VR control circuit 226 may comprise any suitable circuitry for controlling and/or providing one or more of the VR supplies to the platform 250. It may, and will likely, include more than one chip and/or device. For example, it may have a control portion that is separate from the VR components that it is controlling. It is common for platform processor designers to define VR module specifications for their processors. For example, some Intel^{™} processors are designed to be powered by VR modules that comply with a VR module specification such as the IMVP9 or IMVP9.2 specification. Other processors typically have similar acceptable VR specifications. In the depicted example, the VR control circuit 226 has an analog system power input for monitoring system power (Psys) drawn from the power source 210.

The VR control circuit 226 includes a power limit monitor circuit 230 for tracking over-power events when the system power (Psys) exceeds one or more limits. In the depicted embodiment, the limit monitor circuit 230 includes comparators, e.g., analog comparators, 232-236 to identify over power events for first, second and third power thresholds. In the depicted embodiment, the first threshold corresponds to a "Wrn1" power limit; the second threshold corresponds to a "Wm2" power limit; and the third threshold corresponds to a "Crit" power limit. The first and second comparators (232, 234) are coupled to associated counters (233, 235) respectively). The CRIT comparator 236 is coupled to a buffer 237 to drive a throttle (Throt) signal for throttling the processor when the system power goes above the CRIT limit.

The counters are used to count how many times their associated power limit (also referred to as threshold) has been exceeded. In some embodiments, the counts are continually tracked for given durations so as to generate breach rates, the number of power limit breaches per unit time. This may be done in a piecewise sequential fashion, e.g., with the separate counts read on a cadence to generate periodic breach rates (e.g., breaches per given time interval), which may be averaged or simply continually provided as an updated value to be used for a peak processor power control loop as discussed herein. Alternatively, moving breach rate windows could be employed to reduce impacts from extreme count aborations.

The power limit monitor circuit 230 may include circuitry (not shown) for generating and providing the first (Wrn1) and second (Wrn2) power limit breach rates, for example, through registers accessible by a PMC. Note that in some embodiments, e.g. when the VR control circuit 226 is implemented with an IMVP 9.3 controller circuit, it will typically include a system power (Psys) reporting mechanism where the processor can read the value of the power being consumed by the system. This specification also calls for a violations reporting mechanism where power limit thresholds (WARN1, WARN2 and CRIT) when breached are counted by specific registers. It should be remembered that these limits are for the system power (Psys), while the peak maximum processor power limit (Ppmx) is for the processor.

In some embodiments, the implementation within the VR control circuit is with analog comparator blocks that compare the Psys values with settings in the Wrn1, Wrn2 and CRIT registers and run counters that count in units of 2 uS. The count numbers are read by the PMC over the VID interface and fed to the Ppmx control loop to optimize the processor Ppmx power level to a number that allows the Psys excursions to stay within the Wrn1 and Wrn2 settings, i.e., Wrn1 breaches are more than Wrn2 breaches but without too many Wrn2 breaches.

The compute platform 250 includes the processor 205 and rest of the system components 252, which may include displays, user input, graphics processors, and any other devices that may be part of the compute platform. The processor 205 includes a power management control (PMC) circuit 280, which has software and circuitry to manage power and performance for the processor. Among other things, it includes a Ppmx control engine 288 for controlling a maximum processor peak power limit based on workload and power source conditions, as well as on the monitored real time system power (Psys) being consumed. In some embodiments, the PMC may also include, or be coupled with, a classification engine (e.g., PMC software and/or driver software) that receives hardware data regarding the performance of the processor and uses it to generate a present and/or predictive workload behavior classification for the processor, e.g., over a future time period, such as the next 20 to 30 seconds. A classifier may predict the behavior of a workload being processed by the processor into different workload classifications. For example, based on the workload characteristics as well as on past predictions, the classifier may predict a probability of the workload being executed, at any given moment, to be one of a number of different classifications such as idle, battery life, bursty, semiactive, or sustained. Some embodiments then use the prediction(s) and current classifications to inform the Ppmx control loop, e.g., an NN-PID control loop, for setting a Ppmx limit based on monitored system power.

In some embodiments, the Ppmx limit corresponds to a PL4 peak processor power limit. For example, with Intel Turbo^{™} technology, there are several power boost (e.g., turbo-boost) thresholds such as, but not limited to, power limit 4 (PL4), the highest power for a short time period, e.g., multiple milliseconds. In some embodiments, Power Limit 4 is the absolute maximum power limit that a processor can sustain without damaging itself. It is an impermanent power value that the processor's power management system avoids and is capable of lasting for only a short period before the processor shuts down.

In the depicted embodiment, the PMC is coupled with the power delivery module, e.g., to the VR control circuit 226, through a VID interface. This is a two-way link whereby the PMC can request supply voltage levels for the one or more supply voltages (Vs) from the PD module 220. It is also able to program the module circuitry to set different power threshold limits (e.g., Wrn1, Wrn2, CRIT), as will be discussed further below, it should be appreciated that the CRIT system power limit, discussed herein, will not necessarily be the same as the Ppmx limit, but it may be correlated with the Ppmx limit in that if and/or how many times it is breached, may affect the value of Ppmx.

FIG. 3 is a signal diagram showing how system power limits may be implemented in accordance with some embodiments. Among other things, the diagram illustrates how system power (Psys) is made up of processor power (302) and power for the rest of the system (Pros, 304). (For simplicity, with the power monitoring sensor, Rs, being upstream from the PD module and VR output circuit, the power being consumed by the PD module and output circuit, themselves, is not represented and assumed to be sufficiently negligible for purposes of processor power management. However, if this is not insubstantial, it can be considered, and in some embodiments, one or more alternative sensors may be used that are downstream from them.)

There are three system power limit levels, P(Wrn1), P(Wrn2), and P(CRIT), which correspond, respectively, to the Wrn1, Wrn2, and CRIT comparator threshold limits. The Wrn1 limit is less than the Wrn2 limit, which in turn is less than the CRIT limit. For example, in some embodiments, Wrn2 may be around 80% of the CRIT limit, and Wrn1 may be about 70% of the CRIT limit. The CRIT power limit corresponds to the maximum peak system power the power source 210 can provide for a given burst interval (e.g., up to 10 mS). As mentioned above, this value will depend on power source conditions such as if the battery is active or if the adaptor is plugged into an AC outlet. For example, in the case of a battery only mode, the limits would correspond to the power capabilities of the battery. On the other hand, in the case of an AC (adaptor) mode, they would correspond to the sum of the power capabilities of the adapter and also possibly with that of the battery as the battery may supplement the AC power supply with some implementations.

In some embodiments, when the Ppmx control loop is active, it operates to allow for limit breaches (or excursions) such that the breach rate of the first limit (also referred to as Wrn1 or Limit1 breach rate, Limit1BR) is greater than the breach rate of the second, higher limit (referred to as Wrn2 or Limit2 breach rate, Limit2BR). It also works to control the Limit2 breach rate not to exceed a given level.

The Ppmx setting directly and/or indirectly affects the processor's other power limits that control maximum allowed voltage/frequency operating points, their allowable durations, etc. Accordingly, Ppmx may be controlled to indirectly, or directly, control the first (Wrn1) and second (Wrn2) system power limit breach rates to be at acceptable levels such that more power, at least greater bursty power capability, can be squeezed from the system without exceeding critical limits that could otherwise impair user experience through throttling or the like. In some embodiments, ideal acceptable values for Limit1BR and Limit2BR can, for example, be empirically determined in the lab running different kinds of workloads (bursty, graphics intensive etc.). These values may then be used as target values. In some embodiments, ideally, the Ppmx (e.g., PL4) value should be controlled such that the controlled breach rates correspond to the sustained high power capability of the power source. For example, when it is the battery alone, the Limit1BR and Limit2BR should correspond to the battery's sustained high power capability (e.g., 2C discharge for 15 S at 50% duty-cycle). In some workload scenarios, Ppmx may be controlled, by monitoring Limit1BR and Limit2BR, to correspond to the power source's maximum peak capability (e.g., 2.5C or 3C with a debounce time in the range of 10 mS during battery mode). In some embodiments, a charger may allow for the programming of a threshold discharge current from the battery which may be closer to the short-circuit current, which the battery can support for only a few or tens of µS and can be used as a true fail-safe to assert the throttle of the processor. Also, in the AC powered scenario, the adapter current limit may be programmed based on the peak current capability as advertised by the adapter and used for the same purpose of asserting the throttle as a fail-safe.

With some embodiments, the Ppmx control framework may be used in a slower loop, relative to the primary power and performance management control loops. In some embodiments, it may be implemented using a neural network PID control loop programmed so that target Limit1BR and Limit2BR levels, which may vary based on workload and power source conditions over different time intervals, can be optimized while not being too low as to leave potential performance unused or too high as to cause frequent processor throttle assertions. In some embodiments, violations of the second (Wrn2) limit can be used to trigger demotion of Ppmx.

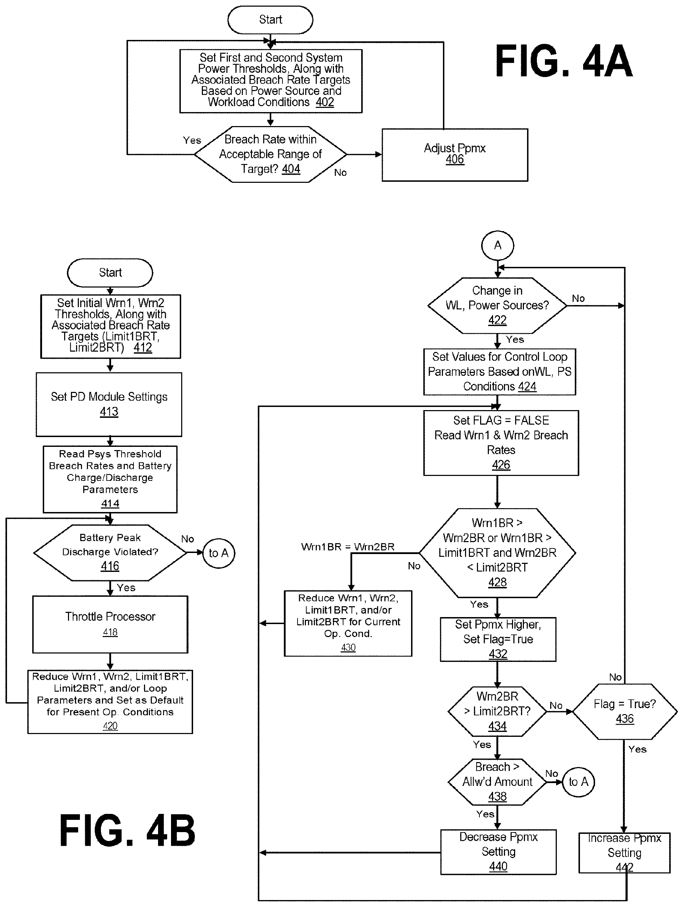

FIG. 4A is a flow diagram showing a Ppmx control routine in accordance with some embodiments. At 402, a first system power threshold and a first threshold breach rate target (BRT) is set. The first system power threshold, for example, may correspond to a Wrn1, Wrn2 or any other suitable system power monitor threshold. The first system power threshold and the first power threshold BRT are based on the power source and workload conditions of the processor platform. At 404, the routine determines if the present breach rate is within an acceptable range of the breach rate target. For example, it may check to see if it is within a range from 10% below the target to 10% above the target, or it may determine if it is within 10%, or other, below, or above, the target. If it is within the range, it loops back to 402. On the other hand, if the current breach rate is not within the target's range, the routine proceeds to 406 and adjusts Ppmx accordingly. Depending on whether the present breach rate is too low or too high, respectively, it may increase or decrease the Ppmx level. In some embodiments, it may increase or decrease the Ppmx level at different amounts depending upon how far away the breach rate is a way from the target, and it may execute this loop at any suitable cadence, although in some embodiments, it may be slower than a primary power management control loop. In some embodiments, as described above, more than one system power threshold and associated threshold breach rate may be used, e.g., to achieve better resolution. The routine of FIG. 4B, discussed in the following section, is an example of such a control approach.

FIG. 4B is a flow diagram showing a Ppmx control routine in accordance with some embodiments. This routine employs three system power limit thresholds (Wrn1, Wrn2, and CRIT) in cooperation with power limit monitor circuitry as discussed above. At 412, initial Wrn1 and Wrn2 thresholds, along with associated breach rate targets (Limit1BRT, Limit2BRT) are set, and at 413, PD module settings, e.g., peak discharge current, peak discharge duration, are also set. This may correspond to When the system is booted for the first time with initial safe levels for the Wrn1, Wrn2 and CRIT power thresholds, as well as for the count threshold targets, for Wrn1 (Limit1BRT) and Wrn2 (Limit2BRT), are setup. The initial parameters for the system can be set, for example, either based on previous stable parameters that are empirically derived or using default safe parameters that are pre-programmed, e.g., by the OEM.

At 414, the Psys threshold (Wrn1, Wrn2) breach rate values, along with battery charge/discharge values are read.

At 416, the routine determines if power source (e.g., battery peak discharge) limits are violated. If not, it proceeds to 422. On the other hand, if they have been violated, then it goes to 418. At 418, it asserts a throttle to the processor. For example, one or more core operating points may be set to a low freq, mode. At 420, the Wrn1, Wrn2, Limit1BRT, Limit2BRT, and/or loop parameters for the present operating point conditions are adjusted and set as updated default settings. For example, the system power thresholds (Wrn1 and/or Wrn2) and/or the breach rate limit targets (Limit1BRT, Limit2BRT) may be reduced. In addition, loop parameters, e.g., weights and/or K constants for a PID control loop may be modified.

If at 416, it was determined that the power source limits were not violated, the routine proceeds to 422. At 422, it determines if there has been, or will be, a change in operating conditions (e.g., workload, power source. If not, it loops back upon itself until changes occur or are to occur. If there is a change in operating conditions, then the routine proceeds to 424 and adjusts the thresholds and/or control loop parameters for the present conditions using updated default values. Based on the workload classification and other real-time operational parameters, the values for Limit1BRT (target or acceptable Wrn1 excursions per unit time) and Limit2BRT (target or acceptable Wrn2 excursions per unit time) are loaded. In addition, appropriate power source discharge current limit and duration, e.g., on the charger, may also be programmed.

At 426, it sets a flag as false and reads the first and second Psys threshold breach rates (Wrn1BR, Wrn2BR) and proceeds to 428.

At 428, it checks to see if either Wrn1BR is greater than Wrn2BR or if Wrn1BR is above Limit1BRT and Wrn2BR is below Limit2BRT. If either condition is true, then it proceeds to 432 but if not, it goes to 430 and reduces the Limit1BRT and/or Limit2BRT for the operating conditions and loops back to 422.

If either condition from 428 were true, then at 432, it increases Ppmx and sets the flag as true. At 434, the routine checks if the Wrn2BR is greater than the Limit2BRT. If so, at 438, it determines if the breach amount (amount above Limit2BRT) is excessive, e.g., above an allowable amount. If it is excessive, then it decreases Ppmx at 440 and loops back to 422. If, however, at 438, if the amount above Limit2BRT was determined not to be excessive, then, from there, it simply loops back to 422.

Returning back to 434, if Wrn2BR was not greater than the Limit2BRT, then the routine goes to 436 to check the status of the flag. If true, it loops back to 422, but if false, it proceeds to 442 and increases Ppmx and loops back to 422. From here, it proceeds as described.

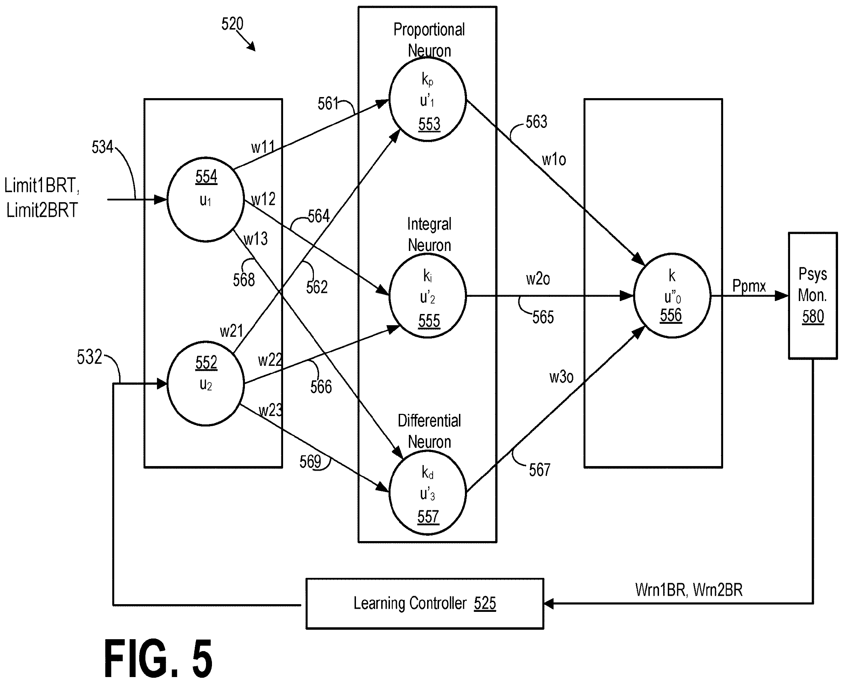

FIG. 5 is a schematic diagram of a neural network PID (NN-PID) controller for controlling, or setting, a maximum peak processor power parameter. In some embodiments, PMC 280 may include a peak power-limit (e.g., Ppmx) power control system 520, which may be configured to perform operations for a processor power limit mechanism based on monitored system power consumption. Control system 520 may be configured to provide a Ppmx power setting for processor 205, for example, based on Wrn1 and Wrn2 counts from PD module counter registers.

Power control system 520 may be configured to implement a self-learning mechanism of processor power consumption control, for example, to support reduced, e.g., minimal, tuning, for example, while supporting a flexibility to achieve improved performance. It may be configured to do this based on an implemented Neural Network Proportional Integral Derivative (NN-PID) technique. The NN-PID based control system (or loop) 520 incorporates a machine learning (ML) architecture that may be configured to learn platform limitations of computing system 250. The ML-based NN-PID controller may be configured to control the Ppmx power setting with parameters, e.g., optimal parameters, for example, to obtain an improved, e.g., a maximal possible, performance of processor 205.

The NN-PID system may include one or more PID controllers, which may be configured to provide dynamic performance and/or power saving scalability, for example. In some embodiments, the NN-PID based control system 520 may be configured to determine a maximum peak power setting (Ppmx) based on Wrn1 and Wrn2 breach rate targets (Limit1BRT, Limit2BRT) 534 and input Wrn1 and Wrn2 breach rates 532 received from Psys monitor 580, which in some embodiments, may be part of a Ppmx control module such as control module 288. The NN-PID system 520 may be configured to operate within a unitless, e.g., normalized, domain, for example, to expedite a learning process for NN-PID control system 520. For example, the Wrn1, Wrn2 breach rate inputs 532, and the target breach rates 534 may be normalized. The NN-PID control system may include a neural network that may include a plurality of NN nodes. The NN-PID control system may include a first NN input node 554 configured to input the target first and second (Wrn1, Wrn2) breach rates, and it may include a second NN input node 552 configured to input the monitored breach rates, which in some embodiments, are received through a learning controller 525.

The NN-PID control system may include an NN proportional (P) node 553, which may be configured to provide a P-node output based on a first weighted combination of an output of the first NN input node 554 and an output of the second NN input node 552.

In one example, the NN P node 553 may determine the P-node output 563, denoted kp, for example, based on a sum of a weighted value 561 and a weighted value 562. For example, the weighted value 561 may be based on a weight denoted w11, applied to the output of the first NN input node 554. For example, the weighted value 562 may be based on a weight w21, applied to the output of the second NN input node 552. For example, the NN P node 553 may determine the P-node output 563. In other aspects, the NN P node 553 may determine the P-node output 563 based on any other suitable weighted combination of the output of the first NN input node 554 and the output of the second NN input node 552.

The NN-PID control system 520 may include an NN integral (I) node 555 that may be configured to provide an I-node output 565 based on a second weighted combination of the output of the first NN input node 554 and the output of the second NN input node 552. In one example, the NN I node 555 may determine the I-node output 565 based on an integral over time of the sum of a weighted value 564 and a weighted value 566. For example, the weighted value 564 may be based on a weight w12, applied to the output of the first NN input node 554. For example, the weighted value 566 may be based on a weight w22, applied to the output of the second NN input node 552. For example, the NN I node 555 may determine the I-node output 565. In other aspects, the NN I node 555 may determine the I-node output 565 based on any suitable weighted combination of the output of the first NN input node 554 and the output of the second NN input node 552.

The NN-PID control system 520 may include an NN derivative (D) node 557 that may be configured to provide a D-node output 567, for example, based on a third weighted combination of the output of the first NN input node 554 and the output of the second NN input node 552.

In some examples, the NN D node 557 may determine a D-node output 567 based on a derivative over time of the sum of a weighted value 568 and a weighted value 569. For example, the weighted value 568 may be based on a weight w13, applied to the output of the first NN input node 554. The weighted value 569 may be based on a weight w23, applied to the output of the second NN input node 552, and the NN D node 557 may determine the D-node output 567. The NN D node 157 may determine the D-node output 567 based on any suitable weighted combination of the output of the first NN input node 554 and the output of the second NN input node 552.

The NN-PID control system 520 may include a combiner 556, which may be configured to provide the Ppmx setting. For example, it may do this based on a combination of the P-node output 563, the I-node output 565, and the D-node output 567.

The NN-PID-based power control system may include a learning controller 525, which may be configured to control a learning activity of the NN-PID controller 520. In some examples, learning controller 525 may determine one or more specific conditions to enable a learning activity ("when-to-learn") of NN-PID controller 520. For example, the learning activity may not always be required, for example, since the power setting may establish a boundary for a power limit that may indirectly affect the controlled variable, e.g., Wrn1 and/or Wrn2 counts. For example, this may be in contrast to NN-PID systems that set a precise output. In another example, depending on the workload being, or to be, run, a maximum peak power limit may not be relevant. For example, if the system is in an idle or sustained mode where burst, or turbo, operations are not required, the NN-PID controller may temporarily suspend learning until peak performance is once again being demanded.

One or more specific conditions for enabling the learning controller may be implemented, for example, to provide a technical solution to support relatively quickly adaptation to a change in conditions. In some embodiments, the learning controller 525 may be configured to maintain enhanced network weight values of NN-PID control system 520, for example, in scenarios where modification of the weight values may lead to divergence of the neural network.

In operation, the NN-PID control system works to squeeze as much performance from the processor by controlling a Ppmx setting to be a high as can be pushed without impairing the system or user experience. As with the routine from FIG. 4, if the Wrn1 breach rate is greater than the Wrn2 breach rate, or if the Wrn1 breach rate is below the Limit1BRT, implying that there is still unutilized power for Ppmx that can be used, the Ppmx value is set higher. But, if the Wrn2 breach rate has exceeded the Limit2BRT by an excessive amount, the Ppmx limit is reduced through a demotion process. However, if it has exceeded Limit2BRT by a small number, then the Ppmx value might be sound, and the loop may be deemed to be stable.

When the Wrn2 breach rate is equal to the Wm1 breach rate, it could mean that there is a possibility for using higher Limit1BRT and Limit2BRT settings. Accordingly, the control system increases the Wrn1, Wrn2, Limit1BRT, and/or Limit2BRT values to extract more performance from the system.

The size of the steps involved in increasing or decreasing the Ppmx and/or breach rate or power warning levels may be determined through the NN-PID routine, which in some embodiments, will learn the values of the Kp, Ki, Kd constants through both forward and backward propagation. Further enhancement may be attained where the initial values of the Kp, Ki, Kd can be pre-assigned based on prior learnings for the different types of workloads and then suitable smaller modifications made during operation.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

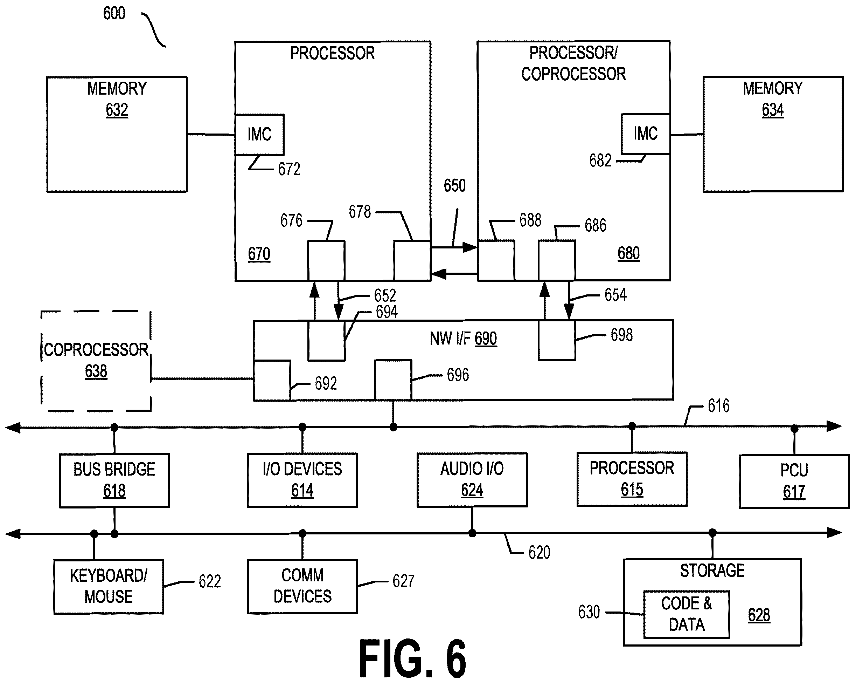

FIG. 6 illustrates an example computing system. Multiprocessor system 600 is an interfaced system and includes a plurality of processors or cores including a first processor 670 and a second processor 680 coupled via an interface 650 such as a point-to-point (P-P) interconnect, a fabric, and/or bus. In some examples, the first processor 670 and the second processor 680 are homogeneous. In some examples, first processor 670 and the second processor 680 are heterogenous. Though the example multiprocessor system 600 is shown to have two processors, the system may have three or more processors, or may be a single processor system. In some examples, the computing system is a system on a chip (SoC).

Processors 670 and 680 are shown including integrated memory controller (IMC) circuitry 672 and 682, respectively. Processor 670 also includes interface circuits 676 and 678; similarly, second processor 680 includes interface circuits 686 and 688. Processors 670, 680 may exchange information via the interface 650 using interface circuits 678, 688. IMCs 672 and 682 couple the processors 670, 680 to respective memories, namely a memory 632 and a memory 634, which may be portions of main memory locally attached to the respective processors.

Processors 670, 680 may each exchange information with a network interface (NW I/F) 690 via individual interfaces 652, 654 using interface circuits 676, 694, 686, 698. The network interface 690 (e.g., one or more of an interconnect, bus, and/or fabric, and in some examples is a chipset) may optionally exchange information with a co-processor 638 via an interface circuit 692. In some examples, the co-processor 638 is a special-purpose processor, such as, for example, a high-throughput processor, a network or communication processor, a compression engine, a graphics processor, a general purpose graphics processing unit (GPGPU), a neural-network processing unit (NPU), an embedded processor, a security processor, a cryptographic accelerator, a matrix accelerator, an in-memory analytics accelerator, , a data streaming accelerator, data graph operations, or the like.

A shared cache (not shown) may be included in either processor 670, 680 or outside of both processors, yet connected with the processors via an interface such as P-P interconnect, such that either or both processors' local cache information may be stored in the shared cache if a processor is placed into a low power mode.

Network interface 690 may be coupled to a first interface 616 via interface circuit 696. In some examples, first interface 616 may be an interface such as a Peripheral Component Interconnect (PCI) interconnect, a PCI Express interconnect or another I/O interconnect. In some examples, first interface 616 is coupled to a power management control (PMC) circuit 617, which may include circuitry, software, and/or firmware to perform power management operations with regard to the processors 670, 680 and/or co-processor 638. PMC 617 provides control information to a voltage regulator (not shown) to cause the voltage regulator to generate the appropriate regulated voltage. PMC 617 also provides control information to control the operating voltage generated. In various examples, PCU 617 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software). The PMC uses a processor peak power limit (Ppmx) to manage power consumption in either or both processors, and it does this based on system power being monitored in accordance with embodiments disclosed herein.

PMC 617 is illustrated as being present as logic separate from the processor 670 and/or processor 680. In other cases, PMC 617 may execute on a given one or more of cores (not shown) of processor 670 or 680. In some cases, PMC 617 may be implemented as a microcontroller (dedicated or general-purpose) or other control logic configured to execute its own dedicated power management code, sometimes referred to as P-code. In yet other examples, power management operations to be performed by PMC 617 may be implemented externally to a processor, such as by way of a separate power management integrated circuit (PMIC) or another component external to the processor. In yet other examples, power management operations to be performed by PMC 617 may be implemented within BIOS or other system software.

Various I/O devices 614 may be coupled to first interface 616, along with a bus bridge 618 which couples first interface 616 to a second interface 620. In some examples, one or more additional processor(s) 615, such as co-processors, high throughput many integrated core (MIC) processors, GPGPUs, accelerators (such as graphics accelerators or digital signal processing (DSP) units), field programmable gate arrays (FPGAs), or any other processor, are coupled to first interface 616. In some examples, second interface 620 may be a low pin count (LPC) interface. Various devices may be coupled to second interface 620 including, for example, a keyboard and/or mouse 622, communication devices 627 and storage circuitry 628. Storage circuitry 628 may be one or more non-transitory machine-readable storage media as described below, such as a disk drive or other mass storage device which may include instructions/code and data 630 and may implement the storage in some examples. Further, an audio I/O 624 may be coupled to second interface 620. Note that other architectures than the point-to-point architecture described above are possible. For example, instead of the point-to-point architecture, a system such as multiprocessor system 600 may implement a multi-drop interface or other such architecture.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a co-processor including one or more special purpose cores intended primarily for graphics and/or scientific (throughput) computing. Such different processors lead to different computer system architectures, which may include: 1) the co-processor on a separate chip from the CPU; 2) the co-processor on a separate die in the same package as a CPU; 3) the co-processor on the same die as a CPU (in which case, such a co-processor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described co-processor, and additional functionality. Example core architectures are described next, followed by descriptions of example processors and computer architectures.

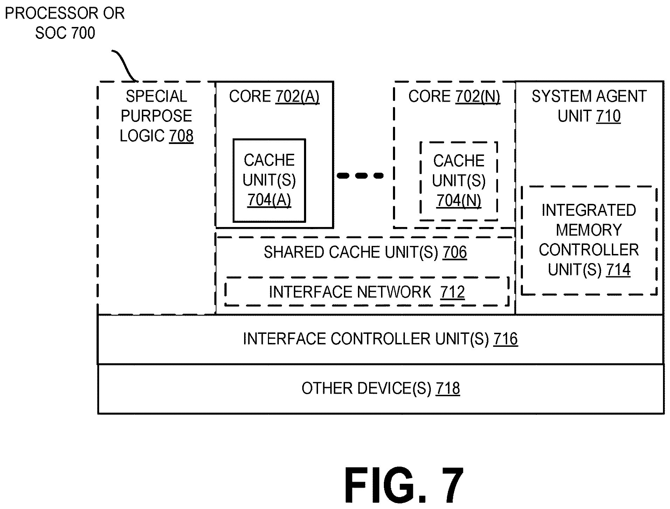

FIG. 7 illustrates a block diagram of an example processor and/or SoC 700 that may have one or more cores and an integrated memory controller. The solid lined boxes illustrate a processor and/or SoC 700 with a single core 702(A), system agent unit circuitry 710, and a set of one or more interface controller unit(s) circuitry 716, while the optional addition of the dashed lined boxes illustrates an alternative processor and/or SoC 700 with multiple cores 702(A)-(N), a set of one or more integrated memory controller unit(s) circuitry 714 in the system agent unit circuitry 710, and special purpose logic 708, as well as a set of one or more interface controller unit(s) circuitry 716. Note that the processor and/or SoC 700 may be one of the processors 670 or 680, or co-processor 638 or 615 of FIG. 6.

Thus, different implementations of the processor and/or SoC 700 may include: 1) a CPU with the special purpose logic 708 being a high-throughput processor, a network or communication processor, a compression engine, a graphics processor, a general purpose graphics processing unit (GPGPU), a neural-network processing unit (NPU), an embedded processor, a security processor, a matrix accelerator, an in-memory analytics accelerator, a compression accelerator, a data streaming accelerator, data graph operations, or the like(which may include one or more cores, not shown), and the cores 702(A)-(N) being one or more general purpose cores (e.g., general purpose in-order cores, general purpose out-of-order cores, or a combination of the two); 2) a co-processor with the cores 702(A)-(N) being a large number of special purpose cores intended primarily for graphics and/or scientific (throughput); and 3) a co-processor with the cores 702(A)-(N) being a large number of general purpose in-order cores. Thus, the processor and/or SoC 700 may be a general-purpose processor, co-processor or special-purpose processor, such as, for example, a network or communication processor, compression engine, graphics processor, GPGPU (general purpose graphics processing unit), a high throughput many integrated core (MIC) co-processor (including 30 or more cores), embedded processor, or the like. The processor may be implemented on one or more chips. The processor and/or SoC 700 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 704(A)-(N) within the cores 702(A)-(N), a set of one or more shared cache unit(s) circuitry 706, and external memory (not shown) coupled to the set of integrated memory controller unit(s) circuitry 714. The set of one or more shared cache unit(s) circuitry 706 may include one or more mid-level caches, such as level 2 (L2), level 3 (L3), level 4 (L4), or other levels of cache, such as a last level cache (LLC), and/or combinations thereof. While in some examples interface network circuitry 712 (e.g., a ring interconnect) interfaces the special purpose logic 708 (e.g., integrated graphics logic), the set of shared cache unit(s) circuitry 706, and the system agent unit circuitry 710, alternative examples use any number of well-known techniques for interfacing such units. In some examples, coherency is maintained between one or more of the shared cache unit(s) circuitry 706 and cores 702(A)-(N). In some examples, interface controller unit(s) circuitry 716 couple the cores 702(A)-(N) to one or more other devices 718 such as one or more I/O devices, storage, one or more communication devices (e.g., wireless networking, wired networking, etc.), etc.

In some examples, one or more of the cores 702(A)-(N) are capable of multi-threading. The system agent unit circuitry 710 includes those components coordinating and operating cores 702(A)-(N). The system agent unit circuitry 710 may include, for example, power control unit (PCU) circuitry and/or display unit circuitry (not shown). The PCU may be or may include logic and components needed for regulating the power state of the cores 702(A)-(N) and/or the special purpose logic 708 (e.g., integrated graphics logic). The display unit circuitry is for driving one or more externally connected displays.

The cores 702(A)-(N) may be homogenous in terms of instruction set architecture (ISA). Alternatively, the cores 702(A)-(N) may be heterogeneous in terms of ISA; that is, a subset of the cores 702(A)-(N) may be capable of executing an ISA, while other cores may be capable of executing only a subset of that ISA or another ISA.

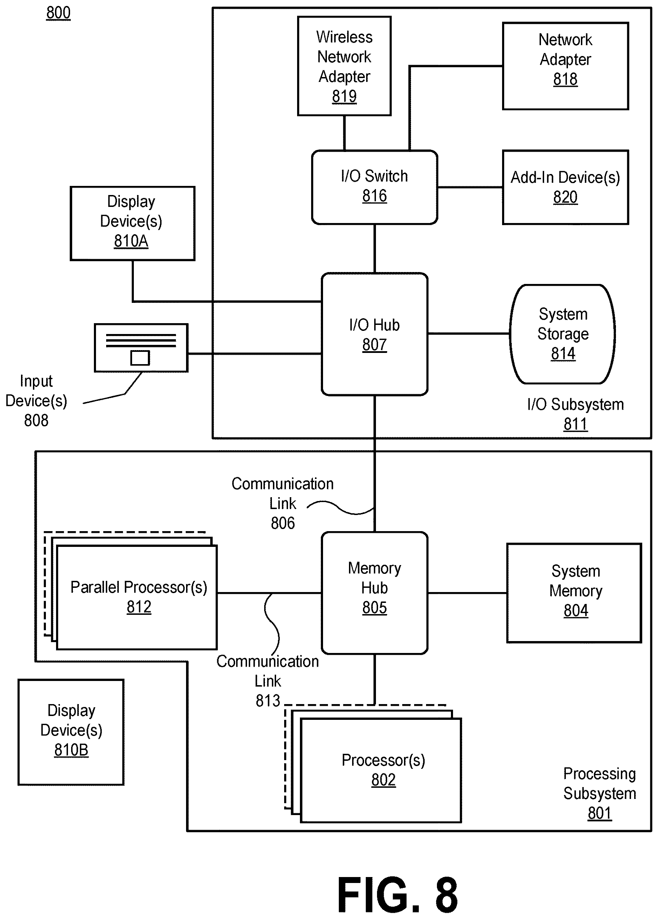

FIG. 8 is a block diagram illustrating a computing system 800 configured to implement one or more aspects of the examples described herein. The computing system 800 includes a processing subsystem 801 having one or more processor(s) 802 and a system memory 804 communicating via an interconnection path that may include a memory hub 805. The memory hub 805 may be a separate component within a chipset component or may be integrated within the one or more processor(s) 802. The memory hub 805 couples with an I/O subsystem 811 via a communication link 806. The I/O subsystem 811 includes an I/O hub 807 that can enable the computing system 800 to receive input from one or more input device(s) 808. Additionally, the I/O hub 807 can enable a display controller, which may be included in the one or more processor(s) 802, to provide outputs to one or more display device(s) 810A. In some examples the one or more display device(s) 810A coupled with the I/O hub 807 can include a local, internal, or embedded display device.

The processing subsystem 801, for example, includes one or more parallel processor(s) 812 coupled to memory hub 805 via a bus or communication link 813. The communication link 813 may be one of any number of standards-based communication link technologies or protocols, such as, but not limited to PCI Express, or may be a vendor specific communications interface or communications fabric. The one or more parallel processor(s) 812 may form a computationally focused parallel or vector processing system that can include a large number of processing cores and/or processing clusters, such as a many integrated core (MIC) processor. For example, the one or more parallel processor(s) 812 form a graphics processing subsystem that can output pixels to one of the one or more display device(s) 810A coupled via the I/O hub 807. The one or more parallel processor(s) 812 can also include a display controller and display interface (not shown) to enable a direct connection to one or more display device(s) 810B.

Within the 1/O subsystem 811, a system storage unit 814 can connect to the 1/O hub 807 to provide a storage mechanism for the computing system 800. An I/O switch 816 can be used to provide an interface mechanism to enable connections between the I/O hub 807 and other components, such as a network adapter 818 and/or wireless network adapter 819 that may be integrated into the platform, and various other devices that can be added via one or more add-in device(s) 820. The add-in device(s) 820 may also include, for example, one or more external graphics processor devices, graphics cards, and/or compute accelerators. The network adapter 818 can be an Ethernet adapter or another wired network adapter. The wireless network adapter 819 can include one or more of a Wi-Fi, Bluetooth, near field communication (NFC), or other network device that includes one or more wireless radios.

The computing system 800 can include other components not explicitly shown, including USB or other port connections, optical storage drives, video capture devices, and the like, which may also be connected to the I/O hub 807. Communication paths interconnecting the various components in FIG. 8 may be implemented using any suitable protocols, such as PCI (Peripheral Component Interconnect) based protocols (e.g., PCI-Express), or any other bus or point-to-point communication interfaces and/or protocol(s), such as the NVLink high-speed interconnect, Compute Express Link^{™} (CXL^{™}) (e.g., CXL.mem), Infinity Fabric (IF), Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Intel QuickPath Interconnect (QPI), Intel Ultra Path Interconnect (UPI), Intel On-Chip System Fabric (IOSF), Omnipath, HyperTransport, Advanced Microcontroller Bus Architecture (AMBA) interconnect, OpenCAPI, Gen-Z, Cache Coherent Interconnect for Accelerators (CCIX), 3GPP Long Term Evolution (LTE) (4G), 3GPP 5G, and variations thereof, or wired or wireless interconnect protocols known in the art. In some examples, data can be copied or stored to virtualized storage nodes using a protocol such as non-volatile memory express (NVMe) over Fabrics (NVMe-oF) or NVMe.

The one or more parallel processor(s) 812 may incorporate circuitry optimized for graphics and video processing, including, for example, video output circuitry, and constitutes a graphics processing unit (GPU). Alternatively or additionally, the one or more parallel processor(s) 812 can incorporate circuitry optimized for general purpose processing, while preserving the underlying computational architecture, described in greater detail herein. Components of the computing system 800 may be integrated with one or more other system elements on a single integrated circuit. For example, the one or more parallel processor(s) 812, memory hub 805, processor(s) 802, and I/O hub 807 can be integrated into a system on chip (SoC) integrated circuit. Alternatively, the components of the computing system 800 can be integrated into a single package to form a system in package (SIP) configuration. In some examples at least a portion of the components of the computing system 800 can be integrated into a multi-chip module (MCM), which can be interconnected with other multi-chip modules into a modular computing system.

It will be appreciated that the computing system 800 shown herein is illustrative and that variations and modifications are possible. The connection topology, including the number and arrangement of bridges, the number of processor(s) 802, and the number of parallel processor(s) 812, may be modified as desired. For instance, system memory 804 can be connected to the processor(s) 802 directly rather than through a bridge, while other devices communicate with system memory 804 via the memory hub 805 and the processor(s) 802. In other alternative topologies, the parallel processor(s) 812 are connected to the I/O hub 807 or directly to one of the one or more processor(s) 802, rather than to the memory hub 805. In other examples, the I/O hub 807 and memory hub 805 may be integrated into a single chip. It is also possible that two or more sets of processor(s) 802 are attached via multiple sockets, which can couple with two or more instances of the parallel processor(s) 812.

Some of the particular components shown herein are optional and may not be included in all implementations of the computing system 800. For example, any number of add-in cards or peripherals may be supported, or some components may be eliminated. Furthermore, some architectures may use different terminology for components similar to those illustrated in FIG. 8. For example, the memory hub 805 may be referred to as a Northbridge in some architectures, while the I/O hub 807 may be referred to as a Southbridge.

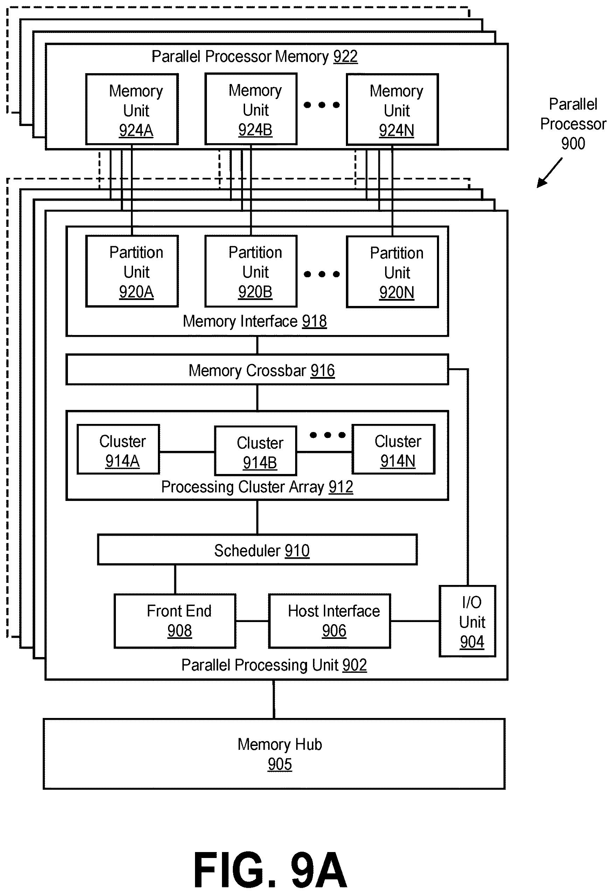

FIG. 9A illustrates examples of a parallel processor 900. The parallel processor 900 may be a GPU, GPGPU or the like as described herein. The various components of the parallel processor 900 may be implemented using one or more integrated circuit devices, such as programmable processors, application specific integrated circuits (ASICs), or field programmable gate arrays (FPGA). The parallel processor 900 may be one or more of the parallel processor(s) 812 shown in FIG. 8.

The parallel processor 900 includes a parallel processing unit 902. The parallel processing unit includes an I/O unit 904 that enables communication with other devices, including other instances of the parallel processing unit 902. The I/O unit 904 may be directly connected to other devices. For instance, the I/O unit 904 connects with other devices via the use of a hub or switch interface, such as memory hub 805. The connections between the memory hub 805 and the I/O unit 904 form a communication link 813. Within the parallel processing unit 902, the I/O unit 904 connects with a host interface 906 and a memory crossbar 916, where the host interface 906 receives commands directed to performing processing operations and the memory crossbar 916 receives commands directed to performing memory operations.

When the host interface 906 receives a command buffer via the I/O unit 904, the host interface 906 can direct work operations to perform those commands to a front end 908. In some examples the front end 908 couples with a scheduler 910, which is configured to distribute commands or other work items to a processing cluster array 912. The scheduler 910 ensures that the processing cluster array 912 is properly configured and in a valid state before tasks are distributed to the processing clusters of the processing cluster array 912. The scheduler 910 may be implemented via firmware logic executing on a microcontroller. The microcontroller implemented scheduler 910 is configurable to perform complex scheduling and work distribution operations at coarse and fine granularity, enabling rapid preemption and context switching of threads executing on the processing cluster array 912. Preferably, the host software can prove workloads for scheduling on the processing cluster array 912 via one of multiple graphics processing doorbells. In other examples, polling for new workloads or interrupts can be used to identify or indicate availability of work to perform. The workloads can then be automatically distributed across the processing cluster array 912 by the scheduler 910 logic within the scheduler microcontroller.

The processing cluster array 912 can include up to "N" processing clusters (e.g., cluster 914A, cluster 914B, through cluster 914N). Each cluster 914A-914N of the processing cluster array 912 can execute a large number of concurrent threads. The scheduler 910 can allocate work to the clusters 914A-914N of the processing cluster array 912 using various scheduling and/or work distribution algorithms, which may vary depending on the workload arising for each type of program or computation. The scheduling can be handled dynamically by the scheduler 910 or can be assisted in part by compiler logic during compilation of program logic configured for execution by the processing cluster array 912. Optionally, different clusters 914A-914N of the processing cluster array 912 can be allocated for processing different types of programs or for performing different types of computations.

The processing cluster array 912 can be configured to perform various types of parallel processing operations. For example, the processing cluster array 912 is configured to perform general-purpose parallel compute operations. For example, the processing cluster array 912 can include logic to execute processing tasks including filtering of video and/or audio data, performing modeling operations, including physics operations, and performing data transformations.

The processing cluster array 912 is configured to perform parallel graphics processing operations. In such examples in which the parallel processor 900 is configured to perform graphics processing operations, the processing cluster array 912 can include additional logic to support the execution of such graphics processing operations, including, but not limited to texture sampling logic to perform texture operations, as well as tessellation logic and other vertex processing logic. Additionally, the processing cluster array 912 can be configured to execute graphics processing related shader programs such as, but not limited to vertex shaders, tessellation shaders, geometry shaders, and pixel shaders. The parallel processing unit 902 can transfer data from system memory via the I/O unit 904 for processing. During processing the transferred data can be stored to on-chip memory (e.g., parallel processor memory 922) during processing, then written back to system memory.

In examples in which the parallel processing unit 902 is used to perform graphics processing, the scheduler 910 may be configured to divide the processing workload into approximately equal sized tasks, to better enable distribution of the graphics processing operations to multiple clusters 914A-914N of the processing cluster array 912. In some of these examples, portions of the processing cluster array 912 can be configured to perform different types of processing. For example, a first portion may be configured to perform vertex shading and topology generation, a second portion may be configured to perform tessellation and geometry shading, and a third portion may be configured to perform pixel shading or other screen space operations, to produce a rendered image for display. Intermediate data produced by one or more of the clusters 914A-914N may be stored in buffers to allow the intermediate data to be transmitted between clusters 914A-914N for further processing.

During operation, the processing cluster array 912 can receive processing tasks to be executed via the scheduler 910, which receives commands defining processing tasks from front end 908. For graphics processing operations, processing tasks can include indices of data to be processed, e.g., surface (patch) data, primitive data, vertex data, and/or pixel data, as well as state parameters and commands defining how the data is to be processed (e.g., what program is to be executed). The scheduler 910 may be configured to fetch the indices corresponding to the tasks or may receive the indices from the front end 908. The front end 908 can be configured to ensure the processing cluster array 912 is configured to a valid state before the workload specified by incoming command buffers (e.g., batch-buffers, push buffers, etc.) is initiated.

Each of the one or more instances of the parallel processing unit 902 can couple with parallel processor memory 922. The parallel processor memory 922 can be accessed via the memory crossbar 916, which can receive memory requests from the processing cluster array 912 as well as the I/O unit 904. The memory crossbar 916 can access the parallel processor memory 922 via a memory interface 918. The memory interface 918 can include multiple partition units (e.g., partition unit 920A, partition unit 920B, through partition unit 920N) that can each couple to a portion (e.g., memory unit) of parallel processor memory 922. The number of partition units 920A-920N may be configured to be equal to the number of memory units, such that a first partition unit 920A has a corresponding first memory unit 924A, a second partition unit 920B has a corresponding second memory unit 924B, and an Nth partition unit 920N has a corresponding Nth memory unit 924N. In other examples, the number of partition units 920A-920N may not be equal to the number of memory devices.

The memory units 924A-924N can include various types of memory devices, including dynamic random-access memory (DRAM) or graphics random access memory, such as synchronous graphics random access memory (SGRAM), including graphics double data rate (GDDR) memory. Optionally, the memory units 924A-924N may also include 3D stacked memory, including but not limited to high bandwidth memory (HBM). Persons skilled in the art will appreciate that the specific implementation of the memory units 924A-924N can vary and can be selected from one of various conventional designs. Render targets, such as frame buffers or texture maps may be stored across the memory units 924A-924N, allowing partition units 920A-920N to write portions of each render target in parallel to efficiently use the available bandwidth of parallel processor memory 922. In some examples, a local instance of the parallel processor memory 922 may be excluded in favor of a unified memory design that utilizes system memory in conjunction with local cache memory.

Optionally, any one of the clusters 914A-914N of the processing cluster array 912 has the ability to process data that will be written to any of the memory units 924A-924N within parallel processor memory 922. The memory crossbar 916 can be configured to transfer the output of each cluster 914A-914N to any partition unit 920A-920N or to another cluster 914A-914N, which can perform additional processing operations on the output. Each cluster 914A-914N can communicate with the memory interface 918 through the memory crossbar 916 to read from or write to various external memory devices. In one of the examples with the memory crossbar 916 the memory crossbar 916 has a connection to the memory interface 918 to communicate with the I/O unit 904, as well as a connection to a local instance of the parallel processor memory 922, enabling the processing units within the different processing clusters 914A-914N to communicate with system memory or other memory that is not local to the parallel processing unit 902. Generally, the memory crossbar 916 may, for example, be able to use virtual channels to separate traffic streams between the clusters 914A-914N and the partition units 920A-920N.

While a single instance of the parallel processing unit 902 is illustrated within the parallel processor 900, any number of instances of the parallel processing unit 902 can be included. For example, multiple instances of the parallel processing unit 902 can be provided on a single add-in card, or multiple add-in cards can be interconnected. For example, the parallel processor 900 can be an add-in device, such as add-in device(s) 820 of FIG. 8, which may be a graphics card such as a discrete graphics card that includes one or more GPUs, one or more memory devices, and device-to-device or network or fabric interfaces. The different instances of the parallel processing unit 902 can be configured to inter-operate even if the different instances have different numbers of processing cores, different amounts of local parallel processor memory, and/or other configuration differences. Optionally, some instances of the parallel processing unit 902 can include higher precision floating point units relative to other instances. Systems incorporating one or more instances of the parallel processing unit 902 or the parallel processor 900 can be implemented in a variety of configurations and form factors, including but not limited to desktop, laptop, or handheld personal computers, servers, workstations, game consoles, and/or embedded systems. An orchestrator can form composite nodes for workload performance using one or more of: disaggregated processor resources, cache resources, memory resources, storage resources, and networking resources.

In some examples, the parallel processing unit 902 can be partitioned into multiple instances. Those multiple instances can be configured to execute workloads associated with different clients in an isolated manner, enabling a pre-determined quality of service to be provided for each client. For example, each cluster 914A-914N can be compartmentalized and isolated from other clusters, allowing the processing cluster array 912 to be divided into multiple compute partitions or instances. In such configuration, workloads that execute on an isolated partition are protected from faults or errors associated with a different workload that executes on a different partition. The partition units 920A-920N can be configured to enable a dedicated and/or isolated path to memory for the clusters 914A-914N associated with the respective compute partitions. This datapath isolation enables the compute resources within a partition can communicate with one or more assigned memory units 924A-924N without being subjected to inference by the activities of other partitions.

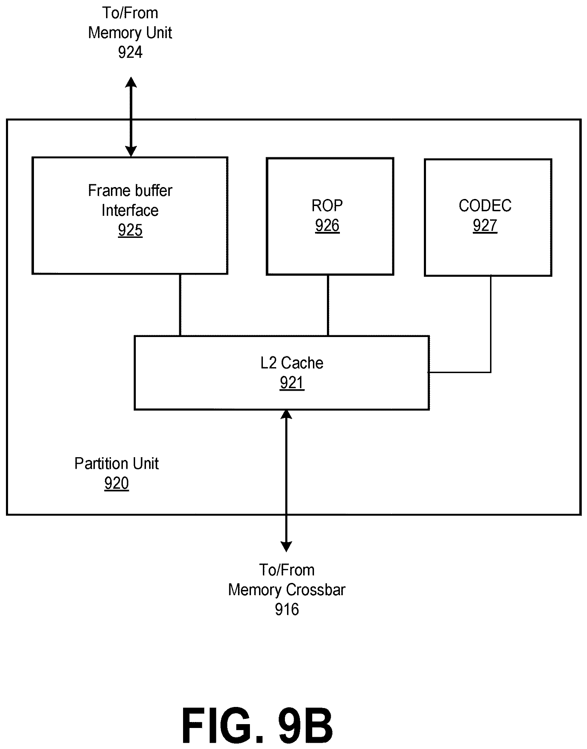

FIG. 9B is a block diagram of a partition unit 920. The partition unit 920 may be an instance of one of the partition units 920A-920N of FIG. 9A. As illustrated, the partition unit 920 includes an L2 cache 921, a frame buffer interface 925, and a ROP 926 (raster operations unit). The L2 cache 921 is a read/write cache that is configured to perform load and store operations received from the memory crossbar 916 and ROP 926. Read misses and urgent write-back requests are output by L2 cache 921 to frame buffer interface 925 for processing. Updates can also be sent to the frame buffer via the frame buffer interface 925 for processing. In some examples the frame buffer interface 925 interfaces with one of the memory units in parallel processor memory, such as the memory units 924A-924N of FIG. 9A (e.g., within parallel processor memory 922). The partition unit 920 may additionally or alternatively also interface with one of the memory units in parallel processor memory via a memory controller (not shown).

In graphics applications, the ROP 926 is a processing unit that performs raster operations such as stencil, z test, blending, and the like. The ROP 926 then outputs processed graphics data that is stored in graphics memory. In some examples the ROP 926 includes or couples with a CODEC 927 that includes compression logic to compress depth or color data that is written to memory or the L2 cache 921 and decompress depth or color data that is read from memory or the L2 cache 921. The compression logic can be lossless compression logic that makes use of one or more of multiple compression algorithms. The type of compression that is performed by the CODEC 927 can vary based on the statistical characteristics of the data to be compressed. For example, in some examples, delta color compression is performed on depth and color data on a per-tile basis. In some examples the CODEC 927 includes compression and decompression logic that can compress and decompress compute data associated with machine learning operations. The CODEC 927 can, for example, compress sparse matrix data for sparse machine learning operations. The CODEC 927 can also compress sparse matrix data that is encoded in a sparse matrix format (e.g., coordinate list encoding (COO), compressed sparse row (CSR), compress sparse column (CSC), etc.) to generate compressed and encoded sparse matrix data. The compressed and encoded sparse matrix data can be decompressed and/or decoded before being processed by processing elements or the processing elements can be configured to consume compressed, encoded, or compressed and encoded data for processing.

The ROP 926 may be included within each processing cluster (e.g., cluster 914A-914N of FIG. 9A) instead of within the partition unit 920. In such example, read and write requests for pixel data are transmitted over the memory crossbar 916 instead of pixel fragment data. The processed graphics data may be displayed on a display device, such as one of the one or more display device(s) 810A-810B of FIG. 8, routed for further processing by the processor(s) 802, or routed for further processing by one of the processing entities within the parallel processor 900 of FIG. 9A.

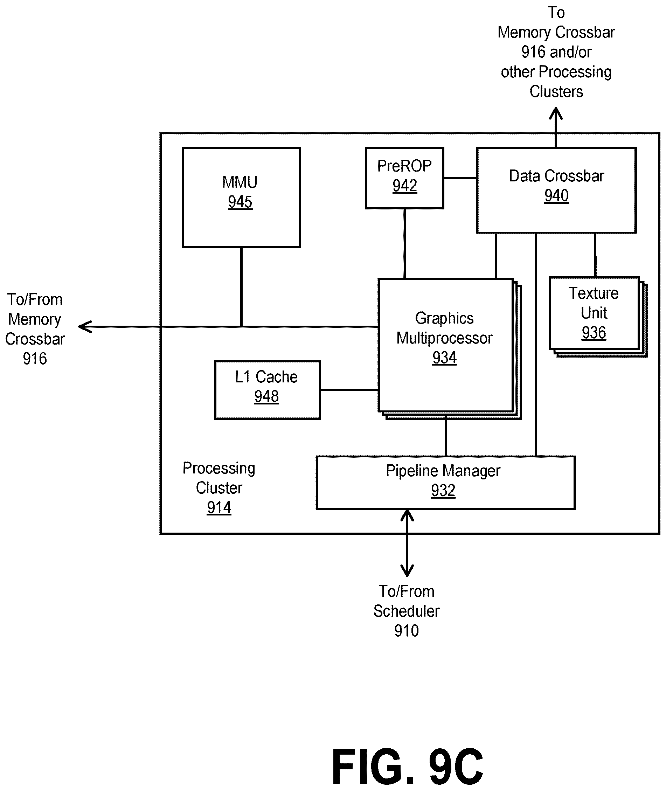

FIG. 9C is a block diagram of a processing cluster 914 within a parallel processing unit. For example, the processing cluster is an instance of one of the processing clusters 914A-914N of FIG. 9A. The processing cluster 914 can be configured to execute many threads in parallel, where the term "thread" refers to an instance of a particular program executing on a particular set of input data. Optionally, single-instruction, multiple-data (SIMD) instruction issue techniques may be used to support parallel execution of a large number of threads without providing multiple independent instruction units. Alternatively, single-instruction, multiple-thread (SIMT) techniques may be used to support parallel execution of a large number of generally synchronized threads, using a common instruction unit configured to issue instructions to a set of processing engines within each one of the processing clusters. Unlike a SIMD execution regime, where all processing engines typically execute identical instructions, SIMT execution allows different threads to more readily follow divergent execution paths through a given thread program. Persons skilled in the art will understand that a SIMD processing regime represents a functional subset of a SIMT processing regime.

Operation of the processing cluster 914 can be controlled via a pipeline manager 932 that distributes processing tasks to SIMT parallel processors. The pipeline manager 932 receives instructions from the scheduler 910 of FIG. 9A and manages execution of those instructions via a graphics multiprocessor 934 and/or a texture unit 936. The graphics multiprocessor 934 is an exemplary instance of a SIMT parallel processor. However, various types of SIMT parallel processors of differing architectures may be included within the processing cluster 914. One or more instances of the graphics multiprocessor 934 can be included within a processing cluster 914. The graphics multiprocessor 934 can process data and a data crossbar 940 can be used to distribute the processed data to one of multiple possible destinations, including other shader units. The pipeline manager 932 can facilitate the distribution of processed data by specifying destinations for processed data to be distributed via the data crossbar 940.

Each graphics multiprocessor 934 within the processing cluster 914 can include an identical set of functional execution logic (e.g., arithmetic logic units, load-store units, etc.). The functional execution logic can be configured in a pipelined manner in which new instructions can be issued before previous instructions are complete. The functional execution logic supports a variety of operations including integer and floating-point arithmetic, comparison operations, Boolean operations, bit-shifting, and computation of various algebraic functions. The same functional-unit hardware could be leveraged to perform different operations and any combination of functional units may be present.

The instructions transmitted to the processing cluster 914 constitute a thread. A set of threads executing across the set of parallel processing engines is a thread group. A thread group executes the same program on different input data. Each thread within a thread group can be assigned to a different processing engine within a graphics multiprocessor 934. A thread group may include fewer threads than the number of processing engines within the graphics multiprocessor 934. When a thread group includes fewer threads than the number of processing engines, one or more of the processing engines may be idle during cycles in which that thread group is being processed. A thread group may also include more threads than the number of processing engines within the graphics multiprocessor 934. When the thread group includes more threads than the number of processing engines within the graphics multiprocessor 934, processing can be performed over consecutive clock cycles. Optionally, multiple thread groups can be executed concurrently on the graphics multiprocessor 934.

The graphics multiprocessor 934 may include an internal cache memory to perform load and store operations. Optionally, the graphics multiprocessor 934 can forego an internal cache and use a cache memory (e.g., level 1 (L1) cache 948) within the processing cluster 914. Each graphics multiprocessor 934 also has access to level 2 (L2) caches within the partition units (e.g., partition units 920A-920N of FIG. 9A) that are shared among all processing clusters 914 and may be used to transfer data between threads. The graphics multiprocessor 934 may also access off-chip global memory, which can include one or more of local parallel processor memory and/or system memory. Any memory external to the parallel processing unit 902 may be used as global memory. Embodiments in which the processing cluster 914 includes multiple instances of the graphics multiprocessor 934 can share common instructions and data, which may be stored in the L1 cache 948.

Each processing cluster 914 may include an MMU 945 (memory management unit) that is configured to map virtual addresses into physical addresses. In other examples, one or more instances of the MMU 945 may reside within the memory interface 918 of FIG. 9A. The MMU 945 includes a set of page table entries (PTEs) used to map a virtual address to a physical address of a tile and optionally a cache line index. The MMU 945 may include address translation lookaside buffers (TLB) or caches that may reside within the graphics multiprocessor 934 or the L1 cache 948 of processing cluster 914. The physical address is processed to distribute surface data access locality to allow efficient request interleaving among partition units. The cache line index may be used to determine whether a request for a cache line is a hit or miss.

In graphics and computing applications, a processing cluster 914 may be configured such that each graphics multiprocessor 934 is coupled to a texture unit 936 for performing texture mapping operations, e.g., determining texture sample positions, reading texture data, and filtering the texture data. Texture data is read from an internal texture L1 cache (not shown) or in some examples from the L1 cache within graphics multiprocessor 934 and is fetched from an L2 cache, local parallel processor memory, or system memory, as needed. Each graphics multiprocessor 934 outputs processed tasks to the data crossbar 940 to provide the processed task to another processing cluster 914 for further processing or to store the processed task in an L2 cache, local parallel processor memory, or system memory via the memory crossbar 916. A preROP 942 (pre-raster operations unit) is configured to receive data from graphics multiprocessor 934, direct data to ROP units, which may be located with partition units as described herein (e.g., partition units 920A-920N of FIG. 9A). The preROP 942 unit can perform optimizations for color blending, organize pixel color data, and perform address translations.

It will be appreciated that the core architecture described herein is illustrative and that variations and modifications are possible. Any number of processing units, e.g., graphics multiprocessor 934, texture units 936, preROPs 942, etc., may be included within a processing cluster 914. Further, while only one processing cluster 914 is shown, a parallel processing unit as described herein may include any number of instances of the processing cluster 914. Optionally, each processing cluster 914 can be configured to operate independently of other processing clusters 914 using separate and distinct processing units, L1 caches, L2 caches, etc.

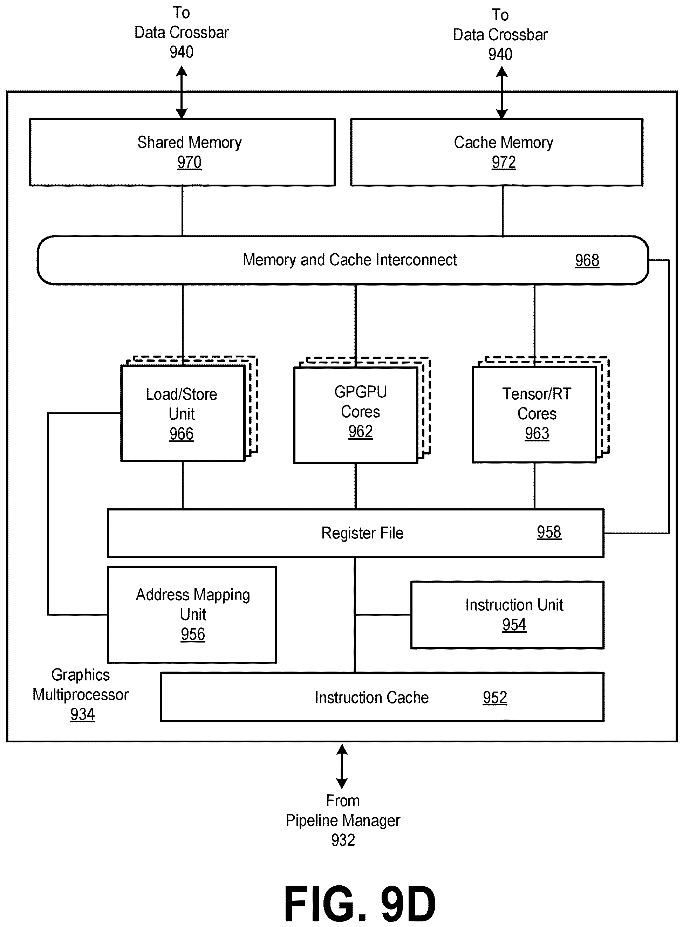

FIG. 9D shows an example of the graphics multiprocessor 934 in which the graphics multiprocessor 934 couples with the pipeline manager 932 of the processing cluster 914. The graphics multiprocessor 934 has an execution pipeline including but not limited to an instruction cache 952, an instruction unit 954, an address mapping unit 956, a register file 958, one or more general purpose graphics processing unit (GPGPU) cores 962, and one or more load/store units 966. The GPGPU cores 962 and load/store units 966 are coupled with cache memory 972 and shared memory 970 via a memory and cache interconnect 968. The graphics multiprocessor 934 may additionally include tensor and/or ray-tracing cores 963 that include hardware logic to accelerate matrix and/or ray-tracing operations.

The instruction cache 952 may receive a stream of instructions to execute from the pipeline manager 932. The instructions are cached in the instruction cache 952 and dispatched for execution by the instruction unit 954. The instruction unit 954 can dispatch instructions as thread groups (e.g., warps), with each thread of the thread group assigned to a different execution unit within GPGPU core 962. An instruction can access any of a local, shared, or global address space by specifying an address within a unified address space. The address mapping unit 956 can be used to translate addresses in the unified address space into a distinct memory address that can be accessed by the load/store units 966.

The register file 958 provides a set of registers for the functional units of the graphics multiprocessor 934. The register file 958 provides temporary storage for operands connected to the data paths of the functional units (e.g., GPGPU cores 962, load/store units 966) of the graphics multiprocessor 934. The register file 958 may be divided between each of the functional units such that each functional unit is allocated a dedicated portion of the register file 958. For example, the register file 958 may be divided between the different warps being executed by the graphics multiprocessor 934.

The GPGPU cores 962 can each include floating point units (FPUs) and/or integer arithmetic logic units (ALUs) that are used to execute instructions of the graphics multiprocessor 934. In some implementations, the GPGPU cores 962 can include hardware logic that may otherwise reside within the tensor and/or ray-tracing cores 963. The GPGPU cores 962 can be similar in architecture or can differ in architecture. For example and in some examples, a first portion of the GPGPU cores 962 include a single precision FPU and an integer ALU while a second portion of the GPGPU cores include a double precision FPU. Optionally, the FPUs can implement the IEEE 754-2008 standard for floating point arithmetic or enable variable precision floating point arithmetic. The graphics multiprocessor 934 can additionally include one or more fixed function or special function units to perform specific functions such as copy rectangle or pixel blending operations. One or more of the GPGPU cores can also include fixed or special function logic.

The GPGPU cores 962 may include SIMD logic capable of performing a single instruction on multiple sets of data. Optionally, GPGPU cores 962 can physically execute SIMD4, SIMD8, and SIMD16 instructions and logically execute SIMD1, SIMD2, and SIMD32 instructions. The SIMD instructions for the GPGPU cores can be generated at compile time by a shader compiler or automatically generated when executing programs written and compiled for single program multiple data (SPMD) or SIMT architectures. Multiple threads of a program configured for the SIMT execution model can be executed via a single SIMD instruction. For example and in some examples, eight SIMT threads that perform the same or similar operations can be executed in parallel via a single SIMD8 logic unit.

The memory and cache interconnect 968 is an interconnect network that connects each of the functional units of the graphics multiprocessor 934 to the register file 958 and to the shared memory 970. For example, the memory and cache interconnect 968 is a crossbar interconnect that allows the load/store unit 966 to implement load and store operations between the shared memory 970 and the register file 958. The register file 958 can operate at the same frequency as the GPGPU cores 962, thus data transfer between the GPGPU cores 962 and the register file 958 is very low latency. The shared memory 970 can be used to enable communication between threads that execute on the functional units within the graphics multiprocessor 934. The cache memory 972 can be used as a data cache for example, to cache texture data communicated between the functional units and the texture unit 936. The shared memory 970 can also be used as a program managed cached. The shared memory 970 and the cache memory 972 can couple with the data crossbar 940 to enable communication with other components of the processing cluster. Threads executing on the GPGPU cores 962 can programmatically store data within the shared memory in addition to the automatically cached data that is stored within the cache memory 972.

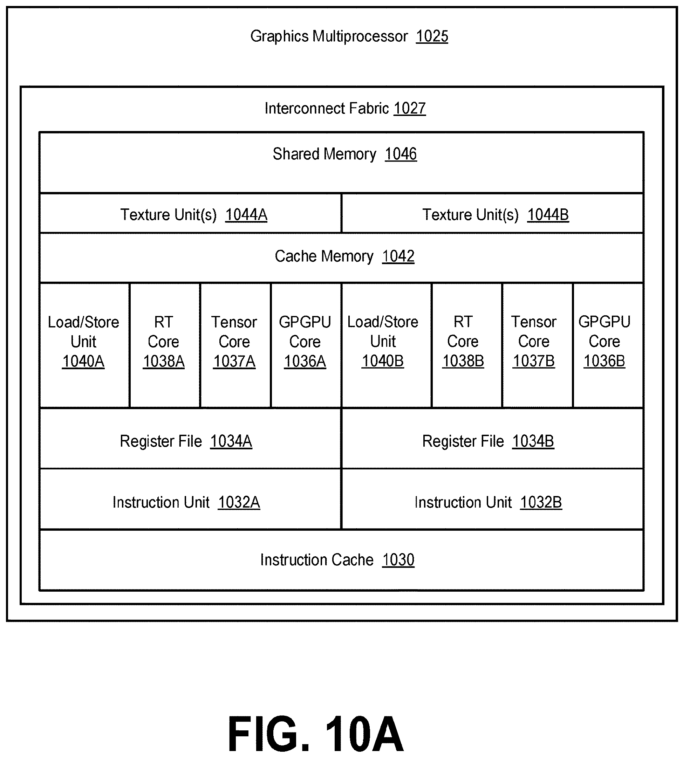

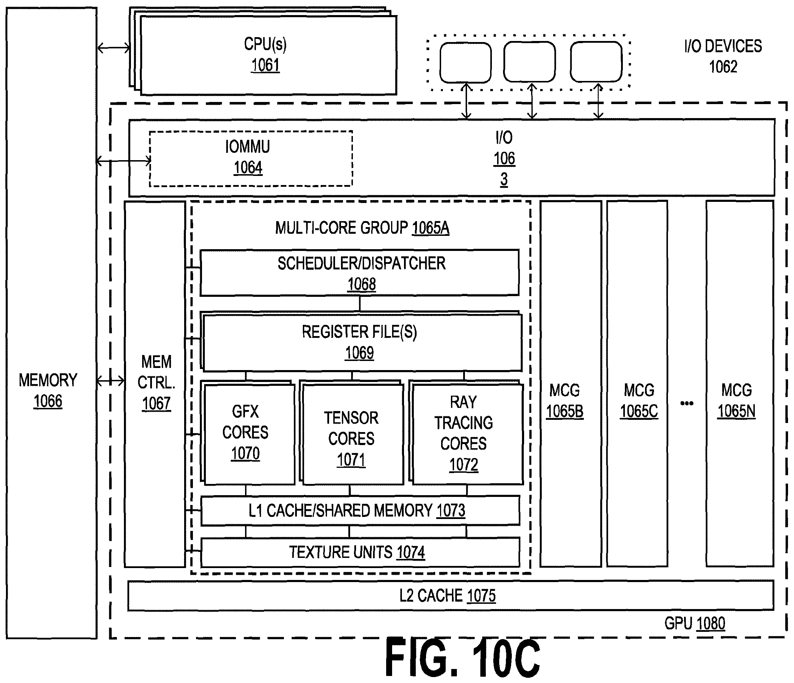

FIGS. 10A-10C illustrate additional graphics multiprocessors, according to examples. FIGS. 10A-10B illustrate graphics multiprocessors 1025, 1050, which are related to the graphics multiprocessor 934 of FIG. 9C and may be used in place of one of those. Therefore, the disclosure of any features in combination with the graphics multiprocessor 934 herein also discloses a corresponding combination with the graphics multiprocessors 1025, 1050, but is not limited to such. FIG. 10C illustrates a graphics processing unit (GPU) 1080 which includes dedicated sets of graphics processing resources arranged into multi-core groups 1065A-1065N, which correspond to the graphics multiprocessors 1025, 1050. The illustrated graphics multiprocessors 1025, 1050 and the multi-core groups 1065A-1065N can be streaming multiprocessors (SM) capable of simultaneous execution of a large number of execution threads.

The graphics multiprocessor 1025 of FIG. 10A includes multiple additional instances of execution resource units relative to the graphics multiprocessor 934 of FIG. 9D. For example, the graphics multiprocessor 1025 can include multiple instances of the instruction unit 1032A-1032B, register file 1034A-1034B, and texture unit(s) 1044A-1044B. The graphics multiprocessor 1025 also includes multiple sets of graphics or compute execution units (e.g., GPGPU core 1036A-1036B, tensor core 1037A-1037B, ray-tracing core 1038A-1038B) and multiple sets of load/store units 1040A-1040B. The execution resource units have a common instruction cache 1030, texture and/or data cache memory 1042, and shared memory 1046.

The various components can communicate via an interconnect fabric 1027. The interconnect fabric 1027 may include one or more crossbar switches to enable communication between the various components of the graphics multiprocessor 1025. The interconnect fabric 1027 may be a separate, high-speed network fabric layer upon which each component of the graphics multiprocessor 1025 is stacked. The components of the graphics multiprocessor 1025 communicate with remote components via the interconnect fabric 1027. For example, the cores 1036A-1036B, 1037A-1037B, and 1038A-1038B can each communicate with shared memory 1046 via the interconnect fabric 1027. The interconnect fabric 1027 can arbitrate communication within the graphics multiprocessor 1025 to ensure a fair bandwidth allocation between components.

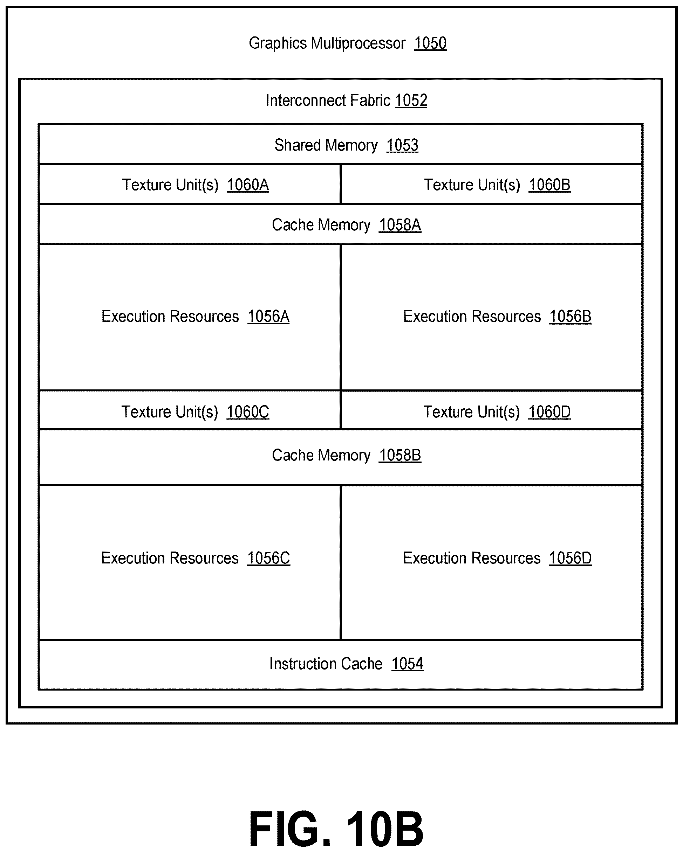

The graphics multiprocessor 1050 of FIG. 10B includes multiple sets of execution resources 1056A-1056D, where each set of execution resource includes multiple instruction units, register files, GPGPU cores, and load store units, as illustrated in FIG. 9D and FIG. 10A. The execution resources 1056A-1056D can work in concert with texture unit(s) 1060A-1060D for texture operations, while sharing an instruction cache 1054, and shared memory 1053. For example, the execution resources 1056A-1056D can share an instruction cache 1054 and shared memory 1053, as well as multiple instances of a texture and/or data cache memory 1058A-1058B. The various components can communicate via an interconnect fabric 1052 similar to the interconnect fabric 1027 of FIG. 10A.

Persons skilled in the art will understand that the architecture described in FIGS. 1, 9A-9D, and 10A-10B are descriptive and not limiting as to the scope of the present examples. Thus, the techniques described herein may be implemented on any properly configured processing unit, including, without limitation, one or more mobile application processors, one or more desktop or server central processing units (CPUs) including multi-core CPUs, one or more parallel processing units, such as the parallel processing unit 902 of FIG. 9A, as well as one or more graphics processors or special purpose processing units, without departure from the scope of the examples described herein.

The parallel processor or GPGPU as described herein may be communicatively coupled to host/processor cores to accelerate graphics operations, machine-learning operations, pattern analysis operations, and various general-purpose GPU (GPGPU) functions. The GPU may be communicatively coupled to the host processor/cores over a bus or other interconnect (e.g., a high-speed interconnect such as PCIe, NVLink, or other known protocols, standardized protocols, or proprietary protocols). In other examples, the GPU may be integrated on the same package or chip as the cores and communicatively coupled to the cores over an internal processor bus/interconnect (i.e., internal to the package or chip). Regardless of the manner in which the GPU is connected, the processor cores may allocate work to the GPU in the form of sequences of commands/instructions contained in a work descriptor. The GPU then uses dedicated circuitry/logic for efficiently processing these commands/instructions.

FIG. 10C illustrates a graphics processing unit (GPU) 1080 which includes dedicated sets of graphics processing resources arranged into multi-core groups 1065A-1065N. While the details of only a single multi-core group 1065A are provided, it will be appreciated that the other multi-core groups 1065B-1065N may be equipped with the same or similar sets of graphics processing resources. Details described with respect to the multi-core groups 1065A-1065N may also apply to any graphics multiprocessor 934, 1025, 1050 described herein.

As illustrated, a multi-core group 1065A may include a set of graphics cores 1070, a set of tensor cores 1071, and a set of ray tracing cores 1072. A scheduler/dispatcher 1068 schedules and dispatches the graphics threads for execution on the various cores 1070, 1071, 1072. A set of register files 1069 store operand values used by the cores 1070, 1071, 1072 when executing the graphics threads. These may include, for example, integer registers for storing integer values, floating point registers for storing floating point values, vector registers for storing packed data elements (integer and/or floating-point data elements) and tile registers for storing tensor/matrix values. The tile registers may be implemented as combined sets of vector registers.

One or more combined level 1 (L1) caches and shared memory units 1073 store graphics data such as texture data, vertex data, pixel data, ray data, bounding volume data, etc., locally within each multi-core group 1065A. One or more texture units 1074 can also be used to perform texturing operations, such as texture mapping and sampling. A Level 2 (L2) cache 1075 shared by all or a subset of the multi-core groups 1065A-1065N stores graphics data and/or instructions for multiple concurrent graphics threads. As illustrated, the L2 cache 1075 may be shared across a plurality of multi-core groups 1065A-1065N. One or more memory controllers 1067 couple the GPU 1080 to a memory 1066 which may be a system memory (e.g., DRAM) and/or a dedicated graphics memory (e.g., GDDR6 memory).

Input/output (I/O) circuitry 1063 couples the GPU 1080 to one or more I/O devices 1062 such as digital signal processors (DSPs), network controllers, or user input devices. An on-chip interconnect may be used to couple the I/O devices 1062 to the GPU 1080 and memory 1066. One or more I/O memory management units (IOMMUs) 1064 of the I/O circuitry 1063 couple the I/O devices 1062 directly to the system memory 1066. Optionally, the IOMMU 1064 manages multiple sets of page tables to map virtual addresses to physical addresses in system memory 1066. The I/O devices 1062, CPU(s) 1061, and GPU(s) 1080 may then share the same virtual address space.

In one implementation of the IOMMU 1064, the IOMMU 1064 supports virtualization. In this case, it may manage a first set of page tables to map guest/graphics virtual addresses to guest/graphics physical addresses and a second set of page tables to map the guest/graphics physical addresses to system/host physical addresses (e.g., within system memory 1066). The base addresses of each of the first and second sets of page tables may be stored in control registers and swapped out on a context switch (e.g., so that the new context is provided with access to the relevant set of page tables). While not illustrated in FIG. 10C, each of the cores 1070, 1071, 1072 and/or multi-core groups 1065A-1065N may include translation lookaside buffers (TLBs) to cache guest virtual to guest physical translations, guest physical to host physical translations, and guest virtual to host physical translations.

The CPU(s) 1061, GPUs 1080, and I/O devices 1062 may be integrated on a single semiconductor chip and/or chip package. The illustrated memory 1066 may be integrated on the same chip or may be coupled to the memory controllers 1067 via an off-chip interface. In one implementation, the memory 1066 comprises GDDR6 memory which shares the same virtual address space as other physical system-level memories, although the underlying principles described herein are not limited to this specific implementation.

The tensor cores 1071 may include a plurality of execution units specifically designed to perform matrix operations, which are the fundamental compute operation used to perform deep learning operations. For example, simultaneous matrix multiplication operations may be used for neural network training and inferencing. The tensor cores 1071 may perform matrix processing using a variety of operand precisions including single precision floating-point (e.g., 32 bits), half-precision floating point (e.g., 16 bits), integer words (16 bits), bytes (8 bits), and half-bytes (4 bits). For example, a neural network implementation extracts features of each rendered scene, potentially combining details from multiple frames, to construct a high-quality final image.

In deep learning implementations, parallel matrix multiplication work may be scheduled for execution on the tensor cores 1071. The training of neural networks, in particular, requires a significant number of matrix dot product operations. In order to process an inner-product formulation of an N x N x N matrix multiply, the tensor cores 1071 may include at least N dot-product processing elements. Before the matrix multiply begins, one entire matrix is loaded into tile registers and at least one column of a second matrix is loaded each cycle for N cycles. Each cycle, there are N dot products that are processed.

Matrix elements may be stored at different precisions depending on the particular implementation, including 16-bit words, 8-bit bytes (e.g., INT8) and 4-bit half-bytes (e.g., INT4). Different precision modes may be specified for the tensor cores 1071 to ensure that the most efficient precision is used for different workloads (e.g., such as inferencing workloads which can tolerate quantization to bytes and half-bytes). Supported formats additionally include 64-bit floating point (FP64) and non-IEEE floating point formats such as the bfloat16 format (e.g., Brain floating point), a 16-bit floating point format with one sign bit, eight exponent bits, and eight significand bits, of which seven are explicitly stored. One example includes support for a reduced precision tensor-float (TF32) mode, which performs computations using the range of FP32 (8-bits) and the precision of FP16 (10-bits). Reduced precision TF32 operations can be performed on FP32 inputs and produce FP32 outputs at higher performance relative to FP32 and increased precision relative to FP16. In some examples, one or more 8-bit floating point formats (FP8) are supported.

In some examples the tensor cores 1071 support a sparse mode of operation for matrices in which the vast majority of values are zero. The tensor cores 1071 include support for sparse input matrices that are encoded in a sparse matrix representation (e.g., coordinate list encoding (COO), compressed sparse row (CSR), compress sparse column (CSC), etc.). The tensor cores 1071 also include support for compressed sparse matrix representations in the event that the sparse matrix representation may be further compressed. Compressed, encoded, and/or compressed and encoded matrix data, along with associated compression and/or encoding metadata, can be read by the tensor cores 1071 and the non-zero values can be extracted. For example, for a given input matrix A, a non-zero value can be loaded from the compressed and/or encoded representation of at least a portion of matrix A. Based on the location in matrix A for the non-zero value, which may be determined from index or coordinate metadata associated with the non-zero value, a corresponding value in input matrix B may be loaded. Depending on the operation to be performed (e.g., multiply), the load of the value from input matrix B may be bypassed if the corresponding value is a zero value. In some examples, the pairings of values for certain operations, such as multiply operations, may be pre-scanned by scheduler logic and only operations between non-zero inputs are scheduled. Depending on the dimensions of matrix A and matrix B and the operation to be performed, output matrix C may be dense or sparse. Where output matrix C is sparse and depending on the configuration of the tensor cores 1071, output matrix C may be output in a compressed format, a sparse encoding, or a compressed sparse encoding.

The ray tracing cores 1072 may accelerate ray tracing operations for both real-time ray tracing and non-real-time ray tracing implementations. In particular, the ray tracing cores 1072 may include ray traversal/intersection circuitry for performing ray traversal using bounding volume hierarchies (BVHs) and identifying intersections between rays and primitives enclosed within the BVH volumes. The ray tracing cores 1072 may also include circuitry for performing depth testing and culling (e.g., using a Z buffer or similar arrangement). In one implementation, the ray tracing cores 1072 perform traversal and intersection operations in concert with the image denoising techniques described herein, at least a portion of which may be executed on the tensor cores 1071. For example, the tensor cores 1071 may implement a deep learning neural network to perform denoising of frames generated by the ray tracing cores 1072. However, the CPU(s) 1061, graphics cores 1070, and/or ray tracing cores 1072 may also implement all or a portion of the denoising and/or deep learning algorithms.

In addition, as described above, a distributed approach to denoising may be employed in which the GPU 1080 is in a computing device coupled to other computing devices over a network or high-speed interconnect. In this distributed approach, the interconnected computing devices may share neural network learning/training data to improve the speed with which the overall system learns to perform denoising for different types of image frames and/or different graphics applications.

The ray tracing cores 1072 may process all BVH traversal and/or ray-primitive intersections, saving the graphics cores 1070 from being overloaded with thousands of instructions per ray. For example, each ray tracing core 1072 includes a first set of specialized circuitry for performing bounding box tests (e.g., for traversal operations) and/or a second set of specialized circuitry for performing the ray-triangle intersection tests (e.g., intersecting rays which have been traversed). Thus, for example, the multi-core group 1065A can simply launch a ray probe, and the ray tracing cores 1072 independently perform ray traversal and intersection and return hit data (e.g., a hit, no hit, multiple hits, etc.) to the thread context. The other cores 1070, 1071 are freed to perform other graphics or compute work while the ray tracing cores 1072 perform the traversal and intersection operations.

Optionally, each ray tracing core 1072 may include a traversal unit to perform BVH testing operations and/or an intersection unit which performs ray-primitive intersection tests. The intersection unit generates a "hit", "no hit", or "multiple hit" response, which it provides to the appropriate thread. During the traversal and intersection operations, the execution resources of the other cores (e.g., graphics cores 1070 and tensor cores 1071) are freed to perform other forms of graphics work.

In some examples described below, a hybrid rasterization/ray tracing approach is used in which work is distributed between the graphics cores 1070 and ray tracing cores 1072.

The ray tracing cores 1072 (and/or other cores 1070, 1071) may include hardware support for a ray tracing instruction set such as Microsoft's DirectX Ray Tracing (DXR) which includes a DispatchRays command, as well as ray-generation, closest-hit, any-hit, and miss shaders, which enable the assignment of unique sets of shaders and textures for each object. Another ray tracing platform which may be supported by the ray tracing cores 1072, graphics cores 1070 and tensor cores 1071 is Vulkan API (e.g., Vulkan version 1.1.85 and later). Note, however, that the underlying principles described herein are not limited to any particular ray tracing ISA.

In general, the various cores 1072, 1071, 1070 may support a ray tracing instruction set that includes instructions/functions for one or more of ray generation, closest hit, any hit, ray-primitive intersection, per-primitive and hierarchical bounding box construction, miss, visit, and exceptions. More specifically, some examples includes ray tracing instructions to perform one or more of the following functions:

Ray Generation - Ray generation instructions may be executed for each pixel, sample, or other user-defined work assignment.

Closest Hit - A closest hit instruction may be executed to locate the closest intersection point of a ray with primitives within a scene.

Any Hit - An any hit instruction identifies multiple intersections between a ray and primitives within a scene, potentially to identify a new closest intersection point.

Intersection - An intersection instruction performs a ray-primitive intersection test and outputs a result.

Per-primitive Bounding box Construction - This instruction builds a bounding box around a given primitive or group of primitives (e.g., when building a new BVH or other acceleration data structure).

Miss - Indicates that a ray misses all geometry within a scene, or specified region of a scene.

Visit - Indicates the child volumes a ray will traverse.

Exceptions - Includes various types of exception handlers (e.g., invoked for various error conditions).

In some examples the ray tracing cores 1072 may be adapted to accelerate general-purpose compute operations that can be accelerated using computational techniques that are analogous to ray intersection tests. A compute framework can be provided that enables shader programs to be compiled into low level instructions and/or primitives that perform general-purpose compute operations via the ray tracing cores. Exemplary computational problems that can benefit from compute operations performed on the ray tracing cores 1072 include computations involving beam, wave, ray, or particle propagation within a coordinate space. Interactions associated with that propagation can be computed relative to a geometry or mesh within the coordinate space. For example, computations associated with electromagnetic signal propagation through an environment can be accelerated via the use of instructions or primitives that are executed via the ray tracing cores. Diffraction and reflection of the signals by objects in the environment can be computed as direct ray-tracing analogies.

Ray tracing cores 1072 can also be used to perform computations that are not directly analogous to ray tracing. For example, mesh projection, mesh refinement, and volume sampling computations can be accelerated using the ray tracing cores 1072. Generic coordinate space calculations, such as nearest neighbor calculations can also be performed. For example, the set of points near a given point can be discovered by defining a bounding box in the coordinate space around the point. BVH and ray probe logic within the ray tracing cores 1072 can then be used to determine the set of point intersections within the bounding box. The intersections constitute the origin point and the nearest neighbors to that origin point. Computations that are performed using the ray tracing cores 1072 can be performed in parallel with computations performed on the graphics cores 1072 and tensor cores 1071. A shader compiler can be configured to compile a compute shader or other general-purpose graphics processing program into low level primitives that can be parallelized across the graphics cores 1070, tensor cores 1071, and ray tracing cores 1072.

Building larger and larger silicon dies is challenging for a variety of reasons. As silicon dies become larger, manufacturing yields become smaller and process technology requirements for different components may diverge. On the other hand, in order to have a high-performance system, key components should be interconnected by high speed, high bandwidth, low latency interfaces. These contradicting needs pose a challenge to high performance chip development.

Embodiments described herein provide techniques to disaggregate an architecture of a system on a chip integrated circuit into multiple distinct chiplets that can be packaged onto a common chassis. In some examples, a graphics processing unit or parallel processor is composed from diverse silicon chiplets that are separately manufactured. A chiplet is an at least partially packaged integrated circuit that includes distinct units of logic that can be assembled with other chiplets into a larger package. A diverse set of chiplets with different IP core logic can be assembled into a single device. Additionally the chiplets can be integrated into a base die or base chiplet using active interposer technology. The concepts described herein enable the interconnection and communication between the different forms of IP within the GPU. The development of IPs on different process may be mixed. This avoids the complexity of converging multiple IPs, especially on a large SoC with several flavors IPs, to the same process.

Enabling the use of multiple process technologies improves the time to market and provides a cost-effective way to create multiple product SKUs. For customers, this means getting products that are more tailored to their requirements in a cost effective and timely manner. Additionally, the disaggregated IPs are more amenable to being power gated independently, components that are not in use on a given workload can be powered off, reducing overall power consumption.

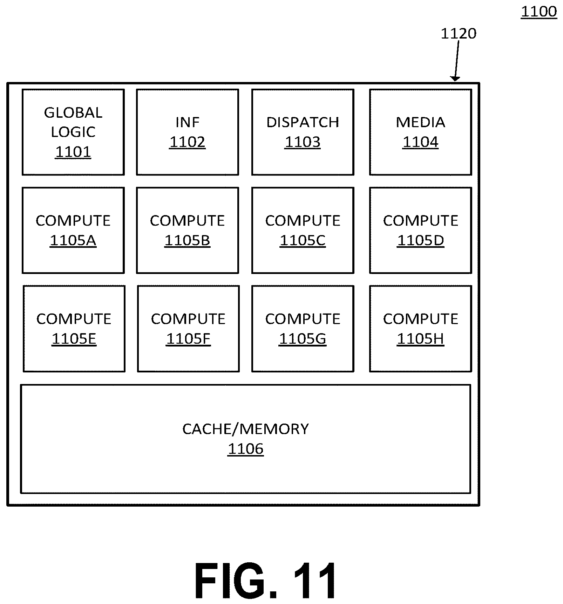

FIG. 11 shows a parallel compute system 1100, according to some examples. In some examples the parallel compute system 1100 includes a parallel processor 1120, which can be a graphics processor or compute accelerator as described herein. The parallel processor 1120 includes a global logic unit 1101, an interface 1102, a thread dispatcher 1103, a media unit 1104, a set of compute units 1105A-1105H, and a cache/memory units 1106. The global logic unit 1101, in some examples, includes global functionality for the parallel processor 1120, including device configuration registers, global schedulers, power management logic, and the like. The interface 1102 can include a front-end interface for the parallel processor 1120. The thread dispatcher 1103 can receive workloads from the interface 1102 and dispatch threads for the workload to the compute units 1105A-1105H. If the workload includes any media operations, at least a portion of those operations can be performed by the media unit 1104. The media unit can also offload some operations to the compute units 1105A-1105H. The cache/memory units 1106 can include cache memory (e.g., L3 cache) and local memory (e.g., HBM, GDDR) for the parallel processor 1120. Compute units 1105 may include units for one or more of a network or communication processor, a core, a graphics processor, a general purpose graphics processing unit (GPGPU), a neural-network processing unit (NPU), an embedded processor, a security processor, a cryptographic accelerator, a matrix accelerator, an in-memory analytics accelerator, a compression accelerator, a data streaming accelerator, or the like.

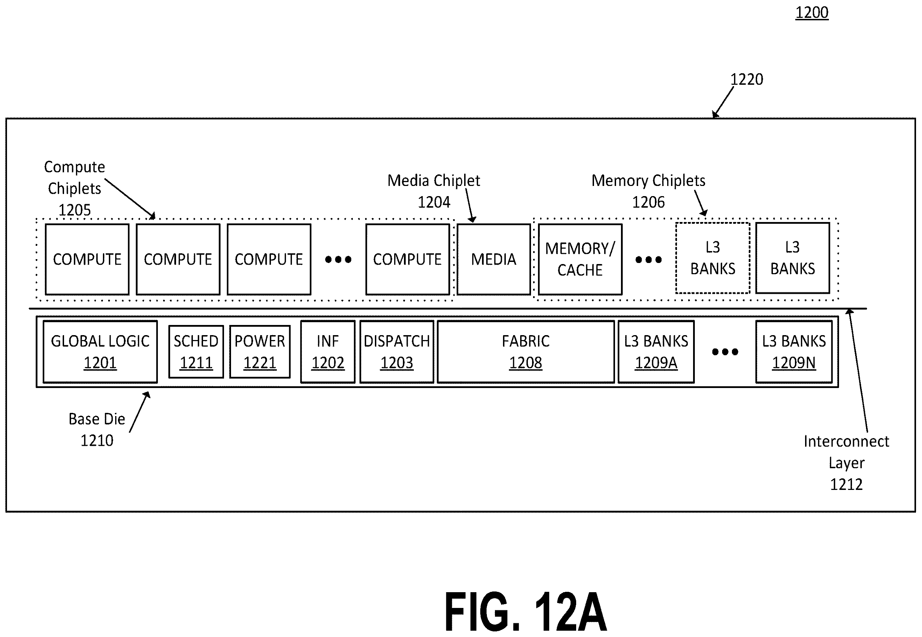

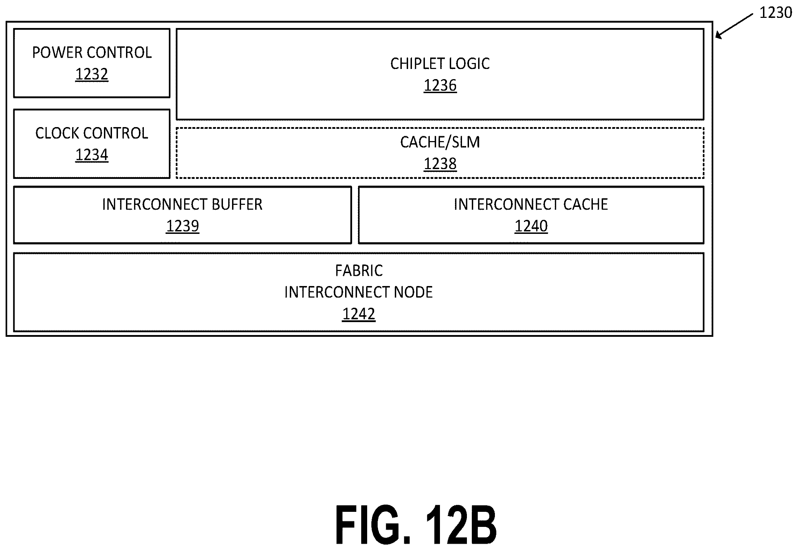

FIGS. 12A-12B illustrate a hybrid logical/physical view of a disaggregated parallel processor, according to examples described herein. FIG. 12A illustrates a disaggregated parallel compute system 1200. FIG. 12B illustrates a chiplet 1230 of the disaggregated parallel compute system 1200.

As shown in FIG. 12A, a disaggregated parallel compute system 1200 can include a parallel processor 1220 in which the various components of the parallel processor SOC are distributed across multiple chiplets. Each chiplet can be a distinct IP core that is independently designed and configured to communicate with other chiplets via one or more common interfaces. The chiplets include but are not limited to compute chiplets 1205, a media chiplet 1204, and memory chiplets 1206. Each chiplet can be separately manufactured using different process technologies. For example, compute chiplets 1205 may be manufactured using the smallest or most advanced process technology available at the time of fabrication, while memory chiplets 1206 or other chiplets (e.g., I/O, networking, etc.) may be manufactured using a larger or less advanced process technologies.

The various chiplets can be bonded to a base die 1210 and configured to communicate with each other and logic within the base die 1210 via an interconnect layer 1212. In some examples, the base die 1210 can include global logic 1201, which can include scheduler 1211 and power management 1221 logic units, an interface 1202, a dispatch unit 1203, and an interconnect fabric 1208 coupled with or integrated with one or more L3 cache banks 1209A-1209N. The interconnect fabric 1208 can be an inter-chiplet fabric that is integrated into the base die 1210. Logic chiplets can use the fabric 1208 to relay messages between the various chiplets. Additionally, L3 cache banks 1209A-1209N in the base die and/or L3 cache banks within the memory chiplets 1206 can cache data read from and transmitted to DRAM chiplets within the memory chiplets 1206 and to system memory of a host.

In some examples the global logic 1201 is a microcontroller that can execute firmware to perform scheduler 1211 and power management 1221 functionality for the parallel processor 1220. The microcontroller that executes the global logic can be tailored for the target use case of the parallel processor 1220. The scheduler 1211 can perform global scheduling operations for the parallel processor 1220. The power management 1221 functionality can be used to enable or disable individual chiplets within the parallel processor when those chiplets are not in use.

The various chiplets of the parallel processor 1220 can be designed to perform specific functionality that, in existing designs, would be integrated into a single die. A set of compute chiplets 1205 can include clusters of compute units (e.g., execution units, streaming multiprocessors, etc.) that include programmable logic to execute compute or graphics shader instructions. A media chiplet 1204 can include hardware logic to accelerate media encode and decode operations. Memory chiplets 1206 can include volatile memory (e.g., DRAM) and one or more SRAM cache memory banks (e.g., L3 banks).

As shown in FIG. 12B, each chiplet 1230 can include common components and application specific components. Chiplet logic 1236 within the chiplet 1230 can include the specific components of the chiplet, such as an array of streaming multiprocessors, compute units, or execution units described herein. The chiplet logic 1236 can couple with an optional cache or shared local memory 1238 or can include a cache or shared local memory within the chiplet logic 1236. The chiplet 1230 can include a fabric interconnect node 1242 that receives commands via the inter-chiplet fabric. Commands and data received via the fabric interconnect node 1242 can be stored temporarily within an interconnect buffer 1239. Data transmitted to and received from the fabric interconnect node 1242 can be stored in an interconnect cache 1240. Power control 1232 and clock control 1234 logic can also be included within the chiplet. The power control 1232 and clock control 1234 logic can receive configuration commands via the fabric can configure dynamic voltage and frequency scaling for the chiplet 1230. In some examples, each chiplet can have an independent clock domain and power domain and can be clock gated and power gated independently of other chiplets.

At least a portion of the components within the illustrated chiplet 1230 can also be included within logic embedded within the base die 1210 of FIG. 12A. For example, logic within the base die that communicates with the fabric can include a version of the fabric interconnect node 1242. Base die logic that can be independently clock or power gated can include a version of the power control 1232 and/or clock control 1234 logic.

Thus, while various examples described herein use the term SOC to describe a device or system having a processor and associated circuitry (e.g., Input/Output ("I/O") circuitry, power delivery circuitry, memory circuitry, etc.) integrated monolithically into a single Integrated Circuit ("IC") die, or chip, the present disclosure is not limited in that respect. For example, in various examples of the present disclosure, a device or system can have one or more processors (e.g., one or more processor cores) and associated circuitry (e.g., Input/Output ("I/O") circuitry, power delivery circuitry, etc.) arranged in a disaggregated collection of discrete dies, tiles and/or chiplets (e.g., one or more discrete processor core die arranged adjacent to one or more other die such as memory die, I/O die, etc.). In such disaggregated devices and systems the various dies, tiles and/or chiplets can be physically and electrically coupled together by a package structure including, for example, various packaging substrates, interposers, active interposers, photonic interposers, interconnect bridges and the like. The disaggregated collection of discrete dies, tiles, and/or chiplets can also be part of a System-on-Package ("SoP")."

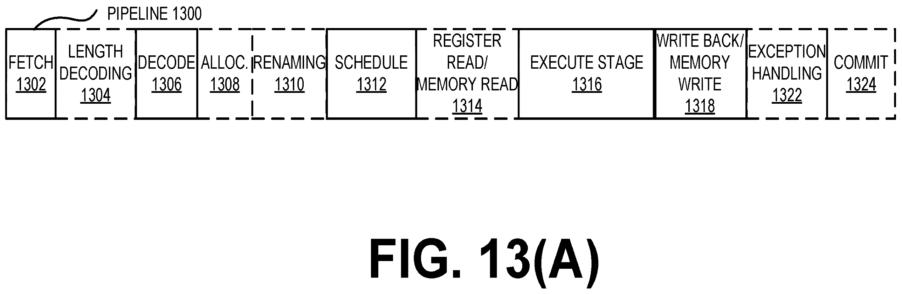

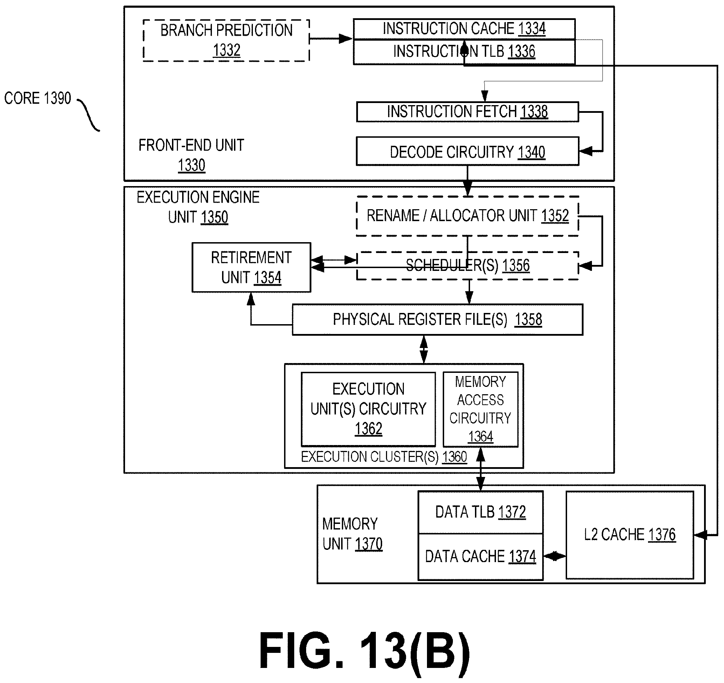

FIG. 13(A) is a block diagram illustrating both an example in-order pipeline and an example register renaming, out-of-order issue/execution pipeline according to examples. FIG. 13(B) is a block diagram illustrating both an example in-order architecture core and an example register renaming, out-of-order issue/execution architecture core to be included in a processor according to examples. The solid lined boxes in FIGS. 13(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 13(A), a processor pipeline 1300 includes a fetch stage 1302, an optional length decoding stage 1304, a decode stage 1306, an optional allocation (Alloc) stage 1308, an optional renaming stage 1310, a schedule (also known as a dispatch or issue) stage 1312, an optional register read/memory read stage 1314, an execute stage 1316, a write back/memory write stage 1318, an optional exception handling stage 1322, and an optional commit stage 1324. One or more operations can be performed in each of these processor pipeline stages. For example, during the fetch stage 1302, one or more instructions are fetched from instruction memory, and during the decode stage 1306, the one or more fetched instructions may be decoded, addresses (e.g., load store unit (LSU) addresses) using forwarded register ports may be generated, and branch forwarding (e.g., immediate offset or a link register (LR)) may be performed. In some examples, the decode stage 1306 and the register read/memory read stage 1314 may be combined into one pipeline stage. In some examples, during the execute stage 1316, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 13(B) may implement the pipeline 1300 as follows: 1) the instruction fetch circuitry 1338 performs the fetch and length decoding stages 1302 and 1304; 2) the decode circuitry 1340 performs the decode stage 1306; 3) the rename/allocator unit circuitry 1352 performs the allocation stage 1308 and renaming stage 1310; 4) the scheduler(s) circuitry 1356 performs the schedule stage 1312; 5) the physical register file(s) circuitry 1358 and the memory unit circuitry 1370 perform the register read/memory read stage 1314; the execution cluster(s) 1360 perform the execute stage 1316; 6) the memory unit circuitry 1370 and the physical register file(s) circuitry 1358 perform the write back/memory write stage 1318; 7) various circuitry may be involved in the exception handling stage 1322; and 8) the retirement unit circuitry 1354 and the physical register file(s) circuitry 1358 perform the commit stage 1324.

FIG. 13(B) shows a processor core 1390 including front-end unit circuitry 1330 coupled to execution engine unit circuitry 1350, and both are coupled to memory unit circuitry 1370. The core 1390 may be a reduced instruction set architecture computing (RISC) core, a complex instruction set architecture computing (CISC) core, a very long instruction word (VLIW) core, or a hybrid or alternative core type. As yet another option, the core 1390 may be a special-purpose core, such as, for example, a network or communication core, compression engine, co-processor core, general purpose computing graphics processing unit (GPGPU) core, graphics core, or the like.

The front-end unit circuitry 1330 may include branch prediction circuitry 1332 coupled to instruction cache circuitry 1334, which is coupled to an instruction translation lookaside buffer (TLB) 1336, which is coupled to instruction fetch circuitry 1338, which is coupled to decode circuitry 1340. In some examples, the instruction cache circuitry 1334 is included in the memory unit circuitry 1370 rather than the front-end unit circuitry 1330. The decode circuitry 1340 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 1340 may further include address generation unit (AGU, not shown) circuitry. In some examples, the AGU generates an LSU address using forwarded register ports, and may further perform branch forwarding (e.g., immediate offset branch forwarding, LR register branch forwarding, etc.). The decode circuitry 1340 may be implemented using various different mechanisms. Examples of suitable mechanisms include, but are not limited to, look-up tables, hardware implementations, programmable logic arrays (PLAs), microcode read only memories (ROMs), etc. In some examples, the core 1390 includes a microcode ROM (not shown) or other medium that stores microcode for certain macroinstructions (e.g., in decode circuitry 1340 or otherwise within the front-end unit circuitry 1330). In some examples, the decode circuitry 1340 includes a micro-operation (micro-op) or operation cache (not shown) to hold/cache decoded operations, micro-tags, or micro-operations generated during the decode or other stages of the processor pipeline 1300. The decode circuitry 1340 may be coupled to rename/allocator unit circuitry 1352 in the execution engine unit circuitry 1350.

The execution engine unit circuitry 1350 includes the rename/allocator unit circuitry 1352 coupled to retirement unit circuitry 1354 and a set of one or more scheduler(s) circuitry 1356. The scheduler(s) circuitry 1356 represents any number of different schedulers, including reservations stations, central instruction window, etc. In some examples, the scheduler(s) circuitry 1356 can include arithmetic logic unit (ALU) scheduler/scheduling circuitry, ALU queues, address generation unit (AGU) scheduler/scheduling circuitry, AGU queues, etc. The scheduler(s) circuitry 1356 is coupled to the physical register file(s) circuitry 1358. Each of the physical register file(s) circuitry 1358 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In some examples, the physical register file(s) circuitry 1358 includes vector registers unit circuitry, writemask registers unit circuitry, and scalar register unit circuitry. These register units may provide architectural vector registers, vector mask registers, general-purpose registers, etc. The physical register file(s) circuitry 1358 is coupled to the retirement unit circuitry 1354 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1354 and the physical register file(s) circuitry 1358 are coupled to the execution cluster(s) 1360. The execution cluster(s) 1360 includes a set of one or more execution unit(s) circuitry 1362 and a set of one or more memory access circuitry 1364. The execution unit(s) circuitry 1362 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). In some examples, execution unit(s) circuitry 1362 may include hardware to support functionality for instructions for one or more of a compression engine, graphics processing, neural-network processing, in-memory analytics, matrix operations, cryptographic operations, data streaming operations, data graph operations, etc.

While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1356, physical register file(s) circuitry 1358, and execution cluster(s) 1360 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1364). It should also be understood that where separate pipelines are used, one or more of these pipelines may be out-of-order issue/execution and the rest in-order.

In some examples, the execution engine unit circuitry 1350 may perform load store unit (LSU) address/data pipelining to an Advanced Microcontroller Bus (AMB) interface (not shown), and address phase and writeback, data phase load, store, and branches.

The set of memory access circuitry 1364 is coupled to the memory unit circuitry 1370, which includes data TLB circuitry 1372 coupled to data cache circuitry 1374 coupled to level 2 (L2) cache circuitry 1376. In some examples, the memory access circuitry 1364 may include load unit circuitry, store address unit circuitry, and store data unit circuitry, each of which is coupled to the data TLB circuitry 1372 in the memory unit circuitry 1370. The instruction cache circuitry 1334 is further coupled to the level 2 (L2) cache circuitry 1376 in the memory unit circuitry 1370. In some examples, the instruction cache 1334 and the data cache 1374 are combined into a single instruction and data cache (not shown) in L2 cache circuitry 1376, level 3 (L3) cache circuitry (not shown), and/or main memory. The L2 cache circuitry 1376 is coupled to one or more other levels of cache and eventually to a main memory.

The core 1390 may support one or more instructions sets (e.g., the x86 instruction set architecture (optionally with some extensions that have been added with newer versions); the MIPS instruction set architecture; the ARM instruction set architecture (optionally with optional additional extensions such as NEON, etc.); RISC instruction set architecture), including the instruction(s) described herein. In some examples, the core 1390 includes logic to support a packed data instruction set architecture extension (e.g., AVX1, AVX2, AVX512, AMX, etc.), thereby allowing the operations used by many multimedia applications to be performed using packed data.

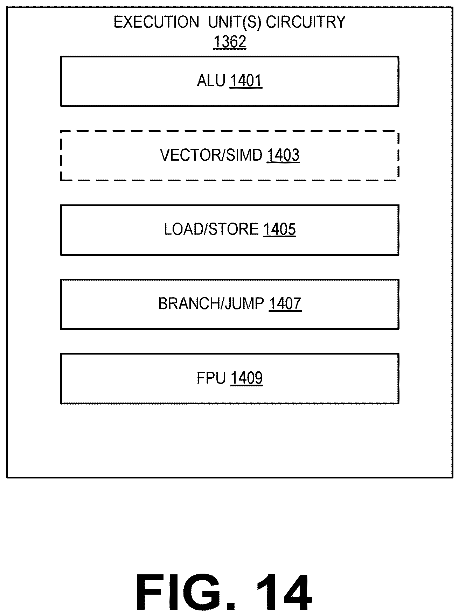

FIG. 14 illustrates examples of execution unit(s) circuitry, such as execution unit(s) circuitry 1362 of FIG. 13(B). As illustrated, execution unit(s) circuitry 1362 may include one or more ALU circuits 1401, optional vector/single instruction multiple data (SIMD) circuits 1403, load/store circuits 1405, branch/jump circuits 1407, and/or Floating-point unit (FPU) circuits 1409. ALU circuits 1401 perform integer arithmetic and/or Boolean operations. Vector/SIMD circuits 1403 perform vector/SIMD operations on packed data (such as SIMD/vector registers). Load/store circuits 1405 execute load and store instructions to load data from memory into registers or store from registers to memory. Load/store circuits 1405 may also generate addresses. Branch/jump circuits 1407 cause a branch or jump to a memory address depending on the instruction. FPU circuits 1409 perform floating-point arithmetic. The width of the execution unit(s) circuitry 1362 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

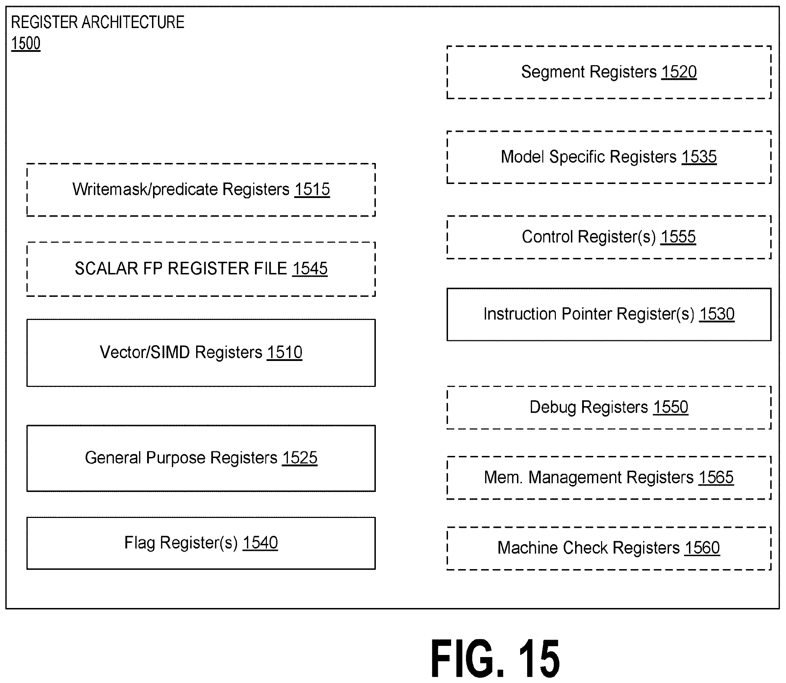

FIG. 15 is a block diagram of a register architecture 1500 according to some examples. As illustrated, the register architecture 1500 includes vector/SIMD registers 1510 that vary from 128-bit to 1,024 bits width. In some examples, the vector/SIMD registers 1510 are physically 512-bits and, depending upon the mapping, only some of the lower bits are used. For example, in some examples, the vector/SIMD registers 1510 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1500 includes writemask/predicate registers 1515. For example, in some examples, there are 8 writemask/predicate registers (sometimes called k0 through k7) that are each 16-bit, 32-bit, 64-bit, or 128-bit in size. Writemask/predicate registers 1515 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1515 corresponds to a data element position of the destination. In other examples, the writemask/predicate registers 1515 are scalable and consists of a set number of enable bits for a given vector element (e.g., 8 enable bits per 64-bit vector element).

The register architecture 1500 includes a plurality of general-purpose registers 1525. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1500 includes scalar floating-point (FP) register file 1545 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1540 (e.g., EFLAGS, RFLAGS, etc.) store status and control information for arithmetic, compare, and system operations. For example, the one or more flag registers 1540 may store condition code information such as carry, parity, auxiliary carry, zero, sign, and overflow. In some examples, the one or more flag registers 1540 are called program status and control registers.

Segment registers 1520 contain segment points for use in accessing memory. In some examples, these registers are referenced by the names CS, DS, SS, ES, FS, and GS.

Model specific registers or machine specific registers (MSRs) 1535 control and report on processor performance. Most MSRs 1535 handle system-related functions and are not accessible to an application program. For example, MSRs may provide control for one or more of: performance-monitoring counters, debug extensions, memory type range registers, thermal and power management, instruction-specific support, and/or processor feature/mode support. Machine check registers 1560 consist of control, status, and error reporting MSRs that are used to detect and report on hardware errors. Control register(s) 1555 (e.g., CR0-CR4) determine the operating mode of a processor (e.g., processor 670, 680, 638, 615, and/or 700) and the characteristics of a currently executing task. In some examples, MSRs 1535 are a subset of control registers 1555.

One or more instruction pointer register(s) 1530 store an instruction pointer value. Debug registers 1550 control and allow for the monitoring of a processor or core's debugging operations.

Memory (mem) management registers 1565 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 1500 may, for example, be used in register file / memory 'ISAB08, or physical register file(s) circuitry 13 58.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

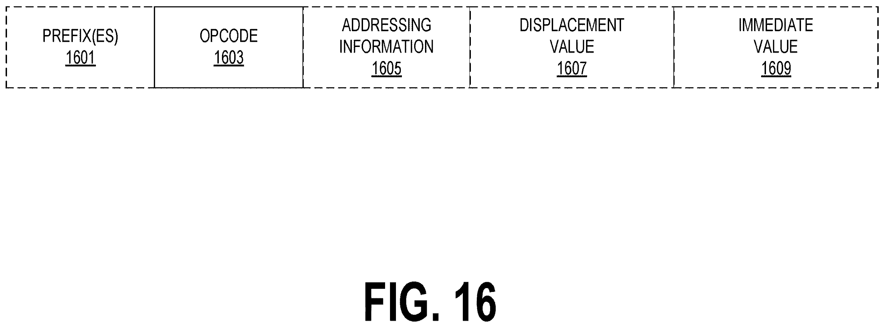

FIG. 16 illustrates examples of an instruction format. As illustrated, an instruction may include multiple components including, but not limited to, one or more fields for: one or more prefixes, an opcode, addressing information (e.g., register identifiers, memory addressing information, etc.), a displacement value, and/or an immediate value. Note that some instructions utilize some or all the fields of the format whereas others may only use the field for the opcode 1603. In some examples, the order illustrated is the order in which these fields are to be encoded, however, it should be appreciated that in other examples these fields may be encoded in a different order, combined, etc.

The prefix(es) f 1601, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1603 is used to at least partially define the operation to be performed upon a decoding of the instruction. In some examples, a primary opcode encoded in the opcode field 1603 is one, two, or three bytes in length. In other examples, a primary opcode can be a different length. An additional 3-bit opcode field is sometimes encoded in another field. The addressing information field 1605 is used to address one or more operands of the instruction, such as a location in memory or one or more registers.

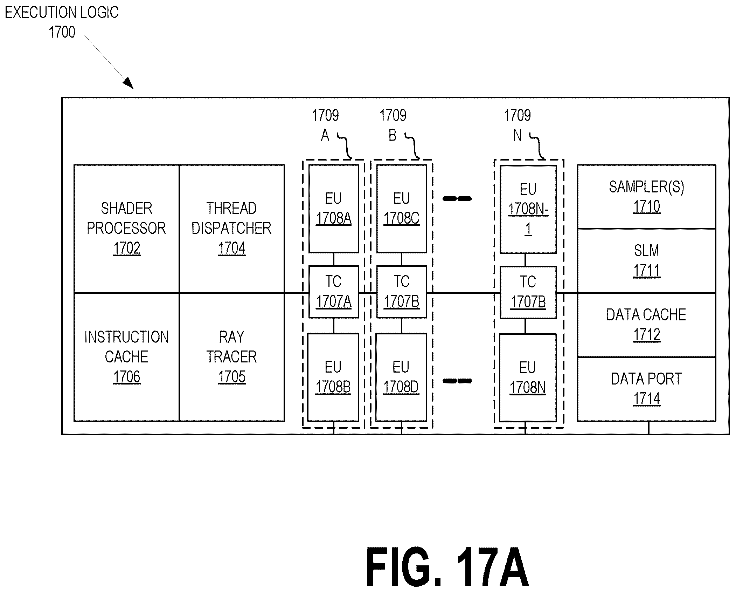

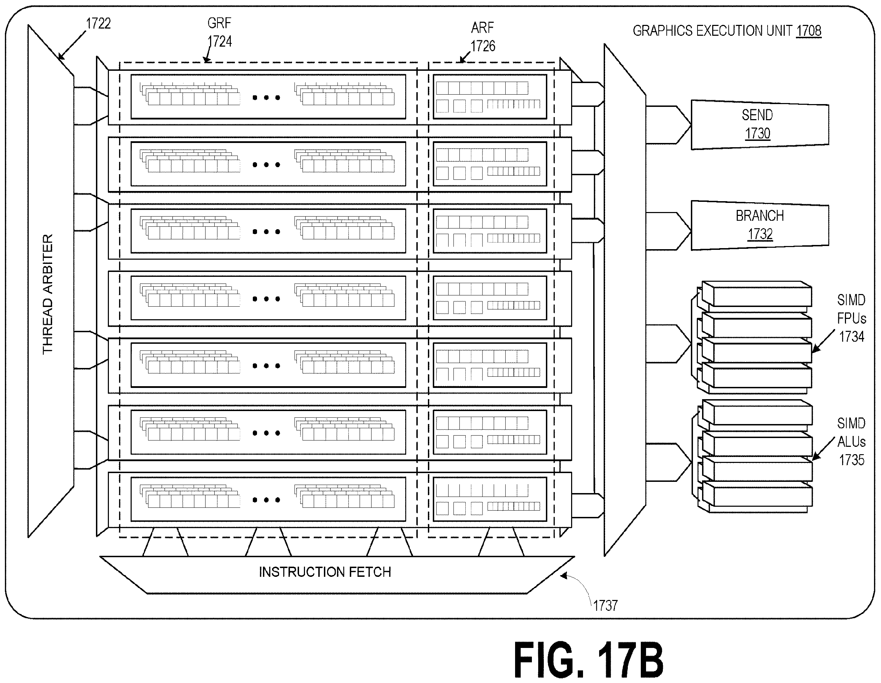

FIGS. 17A-17B illustrate thread execution logic 1700 including an array of processing elements employed in a graphics processor core according to examples described herein. Elements of FIGS. 17A-17B having the same reference numbers (or names) as the elements of any other figure herein can operate or function in any manner similar to that described elsewhere herein, but are not limited to such. FIG. 17A is representative of an execution unit within a general-purpose graphics processor, while FIG. 17B is representative of an execution unit that may be used within a compute accelerator.

As illustrated in FIG. 17A, in some examples thread execution logic 1700 includes a shader processor 1702, a thread dispatcher 1704, instruction cache 1706, a scalable execution unit array including a plurality of execution units 1708A-1708N, a sampler 1710, shared local memory 1711, a data cache 1712, and a data port 1714. In some examples the scalable execution unit array can dynamically scale by enabling or disabling one or more execution units (e.g., any of execution units 1708A, 1708B, 1708C, 1708D, through 1708N-1 and 1708N) based on the computational requirements of a workload. In some examples the included components are interconnected via an interconnect fabric that links to each of the components. In some examples, thread execution logic 1700 includes one or more connections to memory, such as system memory or cache memory, through one or more of instruction cache 1706, data port 1714, sampler 1710, and execution units 1708A-1708N. In some examples, each execution unit (e.g. 1708A) is a stand-alone programmable general-purpose computational unit that is capable of executing multiple simultaneous hardware threads while processing multiple data elements in parallel for each thread. In various examples, the array of execution units 1708A-1708N is scalable to include any number individual execution units.

In some examples, the execution units 1708A-1708N are primarily used to execute shader programs. A shader processor 1702 can process the various shader programs and dispatch execution threads associated with the shader programs via a thread dispatcher 1704. In some examples the thread dispatcher includes logic to arbitrate thread initiation requests from the graphics and media pipelines and instantiate the requested threads on one or more execution unit in the execution units 1708A-1708N. For example, a geometry pipeline can dispatch vertex, tessellation, or geometry shaders to the thread execution logic for processing. In some examples, thread dispatcher 1704 can also process runtime thread spawning requests from the executing shader programs.

In some examples, the execution units 1708A-1708N support an instruction set that includes native support for many standard 3D graphics shader instructions, such that shader programs from graphics libraries (e.g., Direct 3D and OpenGL) are executed with a minimal translation. The execution units support vertex and geometry processing (e.g., vertex programs, geometry programs, vertex shaders), pixel processing (e.g., pixel shaders, fragment shaders) and general-purpose processing (e.g., compute and media shaders). Each of the execution units 1708A-1708N is capable of multi-issue single instruction multiple data (SIMD) execution and multi-threaded operation enables an efficient execution environment in the face of higher latency memory accesses. Each hardware thread within each execution unit has a dedicated high-bandwidth register file and associated independent thread-state. Execution is multi-issue per clock to pipelines capable of integer, single and double precision floating point operations, SIMD branch capability, logical operations, transcendental operations, and other miscellaneous operations. While waiting for data from memory or one of the shared functions, dependency logic within the execution units 1708A-1708N causes a waiting thread to sleep until the requested data has been returned. While the waiting thread is sleeping, hardware resources may be devoted to processing other threads. For example, during a delay associated with a vertex shader operation, an execution unit can perform operations for a pixel shader, fragment shader, or another type of shader program, including a different vertex shader. Various examples can apply to use execution by use of Single Instruction Multiple Thread (SIMT) as an alternate to use of SIMD or in addition to use of SIMD. Reference to a SIMD core or operation can apply also to SIMT or apply to SIMD in combination with SIMT.

Each execution unit in execution units 1708A-1708N operates on arrays of data elements. The number of data elements is the "execution size," or the number of channels for the instruction. An execution channel is a logical unit of execution for data element access, masking, and flow control within instructions. The number of channels may be independent of the number of physical Arithmetic Logic Units (ALUs) or Floating Point Units (FPUs) for a particular graphics processor. In some examples, execution units 1708A-1708N support integer and floating-point data types.

The execution unit instruction set includes SIMD instructions. The various data elements can be stored as a packed data type in a register and the execution unit will process the various elements based on the data size of the elements. For example, when operating on a 256-bit wide vector, the 256 bits of the vector are stored in a register and the execution unit operates on the vector as four separate 64-bit packed data elements (Quad-Word (QW) size data elements), eight separate 32-bit packed data elements (Double Word (DW) size data elements), sixteen separate 16-bit packed data elements (Word (W) size data elements), or thirty-two separate 8-bit data elements (byte (B) size data elements). However, different vector widths and register sizes are possible.

In some examples one or more execution units can be combined into a fused graphics execution unit 1709A-1709N having thread control logic (1707A-1707N) that is common to the fused EUs. Multiple EUs can be fused into an EU group. Each EU in the fused EU group can be configured to execute a separate SIMD hardware thread. The number of EUs in a fused EU group can vary according to examples. Additionally, various SIMD widths can be performed per-EU, including but not limited to SIMD8, SIMD16, and SIMD32. Each fused graphics execution unit 1709A-1709N includes at least two execution units. For example, fused execution unit 1709A includes a first EU 1708A, second EU 1708B, and thread control logic 1707 A that is common to the first EU 1708A and the second EU 1708B. The thread control logic 1707A controls threads executed on the fused graphics execution unit 1709A, allowing each EU within the fused execution units 1709A-1709N to execute using a common instruction pointer register.

One or more internal instruction caches (e.g., 1706) are included in the thread execution logic 1700 to cache thread instructions for the execution units. In some examples, one or more data caches (e.g., 1712) are included to cache thread data during thread execution. Threads executing on the thread execution logic 1700 can also store explicitly managed data in the shared local memory 1711. In some examples, a sampler 1710 is included to provide texture sampling for 3D operations and media sampling for media operations. In some examples, sampler 1710 includes specialized texture or media sampling functionality to process texture or media data during the sampling process before providing the sampled data to an execution unit.

During execution, the graphics and media pipelines send thread initiation requests to thread execution logic 1700 via thread spawning and dispatch logic. Once a group of geometric objects has been processed and rasterized into pixel data, pixel processor logic (e.g., pixel shader logic, fragment shader logic, etc.) within the shader processor 1702 is invoked to further compute output information and cause results to be written to output surfaces (e.g., color buffers, depth buffers, stencil buffers, etc.). In some examples, a pixel shader or fragment shader calculates the values of the various vertex attributes that are to be interpolated across the rasterized object. In some examples, pixel processor logic within the shader processor 1702 then executes an application programming interface (API)-supplied pixel or fragment shader program. To execute the shader program, the shader processor 1702 dispatches threads to an execution unit (e.g., 1708A) via thread dispatcher 1704. In some examples, shader processor 1702 uses texture sampling logic in the sampler 1710 to access texture data in texture maps stored in memory. Arithmetic operations on the texture data and the input geometry data compute pixel color data for each geometric fragment, or discards one or more pixels from further processing.

In some examples, the data port 1714 provides a memory access mechanism for the thread execution logic 1700 to output processed data to memory for further processing on a graphics processor output pipeline. In some examples, the data port 1714 includes or couples to one or more cache memories (e.g., data cache 1712) to cache data for memory access via the data port.

In some examples, the execution logic 1700 can also include a ray tracer 1705 that can provide ray tracing acceleration functionality. The ray tracer 1705 can support a ray tracing instruction set that includes instructions/functions for ray generation.

FIG. 17B illustrates exemplary internal details of an execution unit 1708, according to examples. A graphics execution unit 1708 can include an instruction fetch unit 1737, a general register file array (GRF) 1724, an architectural register file array (ARF) 1726, a thread arbiter 1722, a send unit 1730, a branch unit 1732, a set of SIMD floating point units (FPUs) 1734, and in some examples a set of dedicated integer SIMD ALUs 1735. The GRF 1724 and ARF 1726 includes the set of general register files and architecture register files associated with each simultaneous hardware thread that may be active in the graphics execution unit 1708. In some examples, per thread architectural state is maintained in the ARF 1726, while data used during thread execution is stored in the GRF 1724. The execution state of each thread, including the instruction pointers for each thread, can be held in thread-specific registers in the ARF 1726.

In some examples the graphics execution unit 1708 has an architecture that is a combination of Simultaneous Multi-Threading (SMT) and fine-grained Interleaved Multi-Threading (IMT). The architecture has a modular configuration that can be fine-tuned at design time based on a target number of simultaneous threads and number of registers per execution unit, where execution unit resources are divided across logic used to execute multiple simultaneous threads. The number of logical threads that may be executed by the graphics execution unit 1708 is not limited to the number of hardware threads, and multiple logical threads can be assigned to each hardware thread.

In some examples, the graphics execution unit 1708 can co-issue multiple instructions, which may each be different instructions. The thread arbiter 1722 of the graphics execution unit thread 1708 can dispatch the instructions to one of the send unit 1730, branch unit 1732, or SIMD FPU(s) 1734 for execution. Each execution thread can access 128 general-purpose registers within the GRF 1724, where each register can store 32 bytes, accessible as a SIMD 8-element vector of 32-bit data elements. In some examples, each execution unit thread has access to 4 Kbytes within the GRF 1724, although examples are not so limited, and greater or fewer register resources may be provided in other examples. In some examples the graphics execution unit 1708 is partitioned into seven hardware threads that can independently perform computational operations, although the number of threads per execution unit can also vary according to examples. For example, in some examples up to 16 hardware threads are supported. In an example in which seven threads may access 4 Kbytes, the GRF 1724 can store a total of 28 Kbytes. Where 16 threads may access 4Kbytes, the GRF 1724 can store a total of 64Kbytes. Flexible addressing modes can permit registers to be addressed together to build effectively wider registers or to represent strided rectangular block data structures.

In some examples, memory operations, sampler operations, and other longer-latency system communications are dispatched via "send" instructions that are executed by the message passing send unit 1730. In some examples, branch instructions are dispatched to a dedicated branch unit 1732 to facilitate SIMD divergence and eventual convergence.

In some examples the graphics execution unit 1708 includes one or more SIMD FPU(s) 1734 to perform floating-point operations. In some examples, the FPU(s) 1734 also support integer computation. In some examples the FPU(s) 1734 can SIMD execute up to M number of 32-bit floating-point (or integer) operations, or SIMD execute up to 2M 16-bit integer or 16-bit floating-point operations. In some examples, at least one of the FPU(s) provides extended math capability to support high-throughput transcendental math functions and double precision 64-bit floating-point. In some examples, a set of 8-bit integer SIMD ALUs 1735 are also present, and may be specifically optimized to perform operations associated with machine learning computations.

In some examples, arrays of multiple instances of the graphics execution unit 1708 can be instantiated in a graphics sub-core grouping (e.g., a sub-slice). For scalability, product architects can choose the exact number of execution units per sub-core grouping. In some examples the execution unit 1708 can execute instructions across a plurality of execution channels. In a further example, each thread executed on the graphics execution unit 1708 is executed on a different channel.

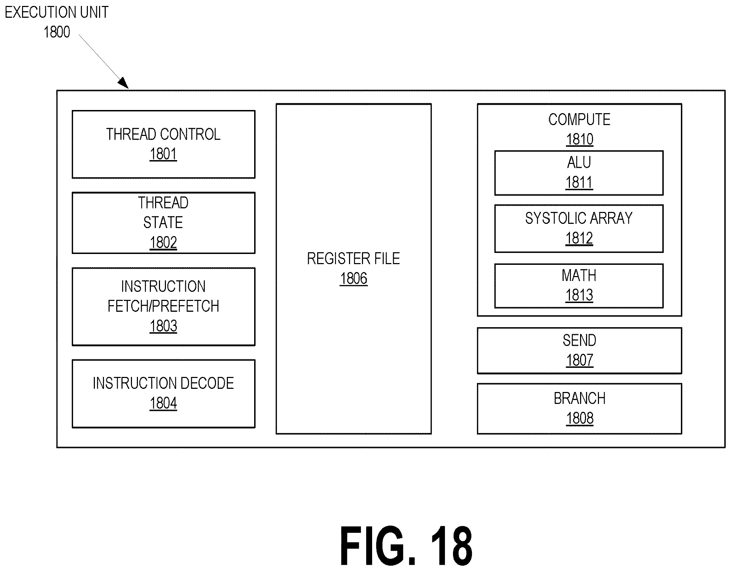

FIG. 18 illustrates an additional execution unit 1800, according to an example. In some examples, the execution unit 1800 includes a thread control unit 1801, a thread state unit 1802, an instruction fetch/prefetch unit 1803, and an instruction decode unit 1804. The execution unit 1800 additionally includes a register file 1806 that stores registers that can be assigned to hardware threads within the execution unit. The execution unit 1800 additionally includes a send unit 1807 and a branch unit 1808. In some examples, the send unit 1807 and branch unit 1808 can operate similarly as the send unit 1730 and a branch unit 1732 of the graphics execution unit 1708 of FIG. 17B.

The execution unit 1800 also includes a compute unit 1810 that includes multiple different types of functional units. In some examples the compute unit 1810 includes an ALU unit 1811 that includes an array of arithmetic logic units. The ALU unit 1811 can be configured to perform 64-bit, 32-bit, and 16-bit integer and floating point operations. Integer and floating point operations may be performed simultaneously. The compute unit 1810 can also include a systolic array 1812, and a math unit 1813. The systolic array 1812 includes a W wide and D deep network of data processing units that can be used to perform vector or other data-parallel operations in a systolic manner. In some examples the systolic array 1812 can be configured to perform matrix operations, such as matrix dot product operations. In some examples the systolic array 1812 support 16-bit floating point operations, as well as 8-bit and 4-bit integer operations. In some examples the systolic array 1812 can be configured to accelerate machine learning operations. In such examples, the systolic array 1812 can be configured with support for the bfloat 16-bit floating point format. In some examples, a math unit 1813 can be included to perform a specific subset of mathematical operations in an efficient and lower-power manner than the ALU unit 1811. The math unit 1813 can include a variant of math logic that may be found in shared function logic of a graphics processing engine provided by other examples. In some examples the math unit 1813 can be configured to perform 32-bit and 64-bit floating point operations.

The thread control unit 1801 includes logic to control the execution of threads within the execution unit. The thread control unit 1801 can include thread arbitration logic to start, stop, and preempt execution of threads within the execution unit 1800. The thread state unit 1802 can be used to store thread state for threads assigned to execute on the execution unit 1800. Storing the thread state within the execution unit 1800 enables the rapid pre-emption of threads when those threads become blocked or idle. The instruction fetch/prefetch unit 1803 can fetch instructions from an instruction cache of higher level execution logic (e.g., instruction cache 1706 as in FIG. 17A). The instruction fetch/prefetch unit 1803 can also issue prefetch requests for instructions to be loaded into the instruction cache based on an analysis of currently executing threads. The instruction decode unit 1804 can be used to decode instructions to be executed by the compute units. In some examples, the instruction decode unit 1804 can be used as a secondary decoder to decode complex instructions into constituent micro-operations.

The execution unit 1800 additionally includes a register file 1806 that can be used by hardware threads executing on the execution unit 1800. Registers in the register file 1806 can be divided across the logic used to execute multiple simultaneous threads within the compute unit 1810 of the execution unit 1800. The number of logical threads that may be executed by the execution unit 1800 is not limited to the number of hardware threads, and multiple logical threads can be assigned to each hardware thread. The size of the register file 1806 can vary across examples based on the number of supported hardware threads. In some examples, register renaming may be used to dynamically allocate registers to hardware threads.

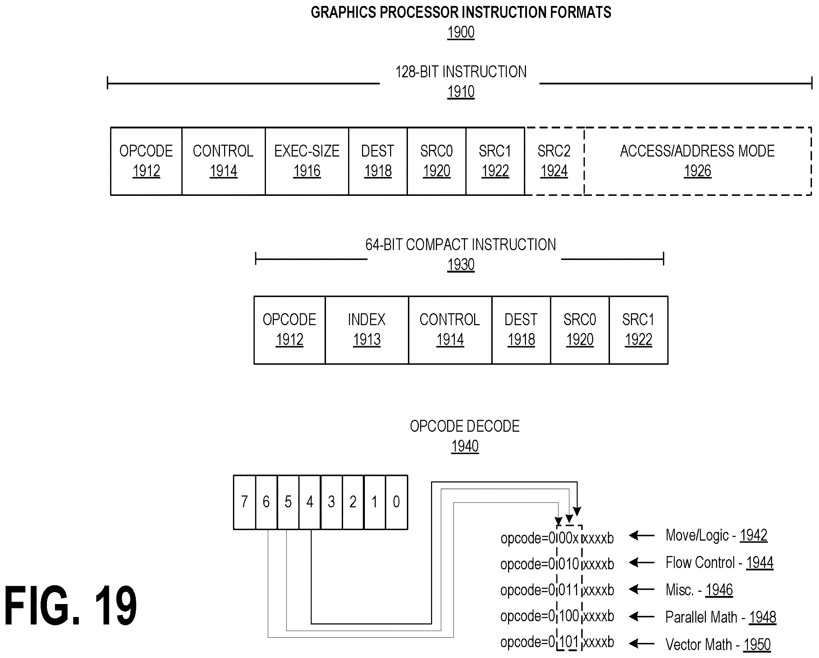

FIG. 19 is a block diagram illustrating a graphics processor instruction formats 1900 according to some examples. In one or more example, the graphics processor execution units support an instruction set having instructions in multiple formats. The solid lined boxes illustrate the components that are generally included in an execution unit instruction, while the dashed lines include components that are optional or that are only included in a sub-set of the instructions. In some examples, instruction format 1900 described and illustrated are macro-instructions, in that they are instructions supplied to the execution unit, as opposed to micro-operations resulting from instruction decode once the instruction is processed.

In some examples, the graphics processor execution units natively support instructions in a 128-bit instruction format 1910. A 64-bit compacted instruction format 1930 is available for some instructions based on the selected instruction, instruction options, and number of operands. The native 128-bit instruction format 1910 provides access to all instruction options, while some options and operations are restricted in the 64-bit compacted format 1930. The native instructions available in the 64-bit compacted format 1930 vary by example. In some examples, the instruction is compacted in part using a set of index values in an index field 1913. The execution unit hardware references a set of compaction tables based on the index values and uses the compaction table outputs to reconstruct a native instruction in the 128-bit instruction format 1910. Other sizes and formats of instruction can be used.

For each format, instruction opcode 1912 defines the operation that the execution unit is to perform. The execution units execute each instruction in parallel across the multiple data elements of each operand. For example, in response to an add instruction the execution unit performs a simultaneous add operation across each color channel representing a texture element or picture element. By default, the execution unit performs each instruction across all data channels of the operands. In some examples, instruction control field 1914 enables control over certain execution options, such as channels selection (e.g., predication) and data channel order (e.g., swizzle). For instructions in the 128-bit instruction format 1910 an exec-size field 1916 limits the number of data channels that will be executed in parallel. In some examples, exec-size field 1916 is not available for use in the 64-bit compact instruction format 1930.

Some execution unit instructions have up to three operands including two source operands, src0 1920, src1 1922, and one destination 1918. In some examples, the execution units support dual destination instructions, where one of the destinations is implied. Data manipulation instructions can have a third source operand (e.g., SRC2 1924), where the instruction opcode 1912 determines the number of source operands. An instruction's last source operand can be an immediate (e.g., hard-coded) value passed with the instruction.

In some examples, the 128-bit instruction format 1910 includes an access/address mode field 1926 specifying, for example, whether direct register addressing mode or indirect register addressing mode is used. When direct register addressing mode is used, the register address of one or more operands is directly provided by bits in the instruction.

In some examples, the 128-bit instruction format 1910 includes an access/address mode field 1926, which specifies an address mode and/or an access mode for the instruction. In some examples the access mode is used to define a data access alignment for the instruction. Some examples support access modes including a 16-byte aligned access mode and a 1-byte aligned access mode, where the byte alignment of the access mode determines the access alignment of the instruction operands. For example, when in a first mode, the instruction may use byte-aligned addressing for source and destination operands and when in a second mode, the instruction may use 16-byte-aligned addressing for all source and destination operands.

In some examples, the address mode portion of the access/address mode field 1926 determines whether the instruction is to use direct or indirect addressing. When direct register addressing mode is used bits in the instruction directly provide the register address of one or more operands. When indirect register addressing mode is used, the register address of one or more operands may be computed based on an address register value and an address immediate field in the instruction.

In some examples instructions are grouped based on opcode 1912 bit-fields to simplify Opcode decode 1940. For an 8-bit opcode, bits 4, 5, and 6 allow the execution unit to determine the type of opcode. The precise opcode grouping shown is merely an example. In some examples, a move and logic opcode group 1942 includes data movement and logic instructions (e.g., move (mov), compare (cmp)). In some examples, move and logic opcode group 1942 shares the five most significant bits (MSB), where move (mov) instructions are in the form of 0000xxxxb and logic instructions are in the form of 0001xxxxb. A flow control instruction group 1944 (e.g., call, jump (jmp)) includes instructions in the form of 0010xxxxb (e.g., 0x20). A miscellaneous instruction group 1946 includes a mix of instructions, including synchronization instructions (e.g., wait, send) in the form of 0011xxxxb (e.g., 0x30). A parallel math instruction group 1948 includes component-wise arithmetic instructions (e.g., add, multiply (mul)) in the form of 0100xxxxb (e.g., 0x40). The parallel math instruction group 1948 performs the arithmetic operations in parallel across data channels. The vector math group 1950 includes arithmetic instructions (e.g., dp4) in the form of 0101xxxxb (e.g., 0x50). The vector math group performs arithmetic such as dot product calculations on vector operands. The illustrated opcode decode 1940, in some examples, can be used to determine which portion of an execution unit will be used to execute a decoded instruction. For example, some instructions may be designated as systolic instructions that will be performed by a systolic array. Other instructions, such as ray-tracing instructions (not shown) can be routed to a ray-tracing core or ray-tracing logic within a slice or partition of execution logic.

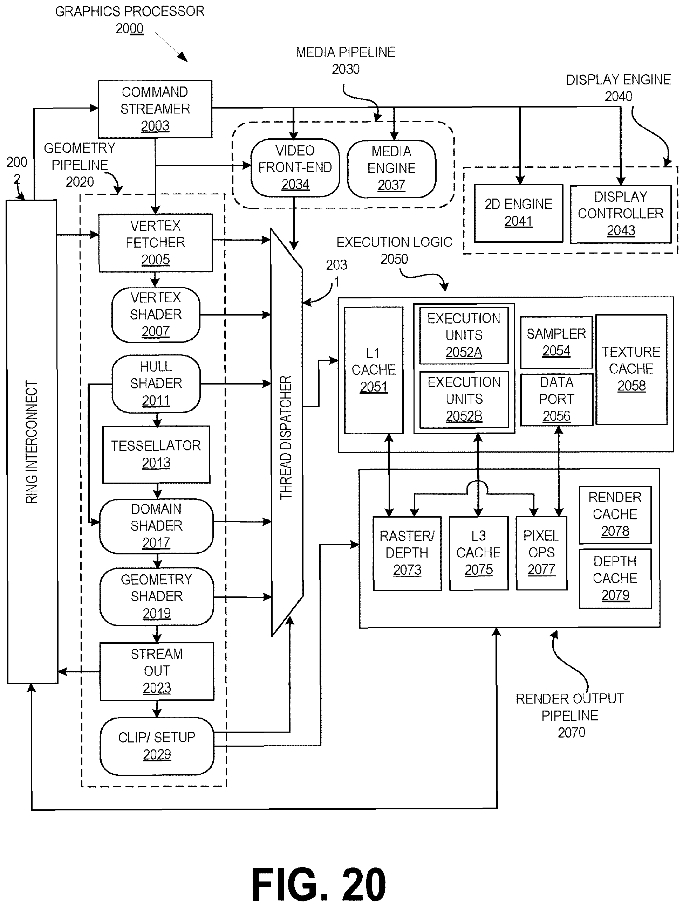

FIG. 20 is a block diagram of another example of a graphics processor 2000. Elements of FIG. 20 having the same reference numbers (or names) as the elements of any other figure herein can operate or function in any manner similar to that described elsewhere herein, but are not limited to such.

In some examples, graphics processor 2000 includes a geometry pipeline 2020, a media pipeline 2030, a display engine 2040, thread execution logic 2050, and a render output pipeline 2070. In some examples, graphics processor 2000 is a graphics processor within a multi-core processing system that includes one or more general-purpose processing cores. The graphics processor is controlled by register writes to one or more control registers (not shown) or via commands issued to graphics processor 2000 via a ring interconnect 2002. In some examples, ring interconnect 2002 couples graphics processor 2000 to other processing components, such as other graphics processors or general-purpose processors. Commands from ring interconnect 2002 are interpreted by a command streamer 2003, which supplies instructions to individual components of the geometry pipeline 2020 or the media pipeline 2030.

In some examples, command streamer 2003 directs the operation of a vertex fetcher 2005 that reads vertex data from memory and executes vertex-processing commands provided by command streamer 2003. In some examples, vertex fetcher 2005 provides vertex data to a vertex shader 2007, which performs coordinate space transformation and lighting operations to each vertex. In some examples, vertex fetcher 2005 and vertex shader 2007 execute vertex-processing instructions by dispatching execution threads to execution units 2052A-2052B via a thread dispatcher 2031.

In some examples, execution units 2052A-2052B are an array of vector processors having an instruction set for performing graphics and media operations. In some examples, execution units 2052A-2052B have an attached L1 cache 2051 that is specific for each array or shared between the arrays. The cache can be configured as a data cache, an instruction cache, or a single cache that is partitioned to contain data and instructions in different partitions.

In some examples, geometry pipeline 2020 includes tessellation components to perform hardware-accelerated tessellation of 3D objects. In some examples, a programmable hull shader 2011 configures the tessellation operations. A programmable domain shader 2017 provides back-end evaluation of tessellation output. A tessellator 2013 operates at the direction of hull shader 2011 and contains special purpose logic to generate a set of detailed geometric objects based on a coarse geometric model that is provided as input to geometry pipeline 2020. In some examples, if tessellation is not used, tessellation components (e.g., hull shader 2011, tessellator 2013, and domain shader 2017) can be bypassed.

In some examples, complete geometric objects can be processed by a geometry shader 2019 via one or more threads dispatched to execution units 2052A-2052B, or can proceed directly to the clipper 2029. In some examples, the geometry shader operates on entire geometric objects, rather than vertices or patches of vertices as in previous stages of the graphics pipeline. If the tessellation is disabled the geometry shader 2019 receives input from the vertex shader 2007. In some examples, geometry shader 2019 is programmable by a geometry shader program to perform geometry tessellation if the tessellation units are disabled.

Before rasterization, a clipper 2029 processes vertex data. The clipper 2029 may be a fixed function clipper or a programmable clipper having clipping and geometry shader functions. In some examples, a rasterizer and depth test component 2073 in the render output pipeline 2070 dispatches pixel shaders to convert the geometric objects into per pixel representations. In some examples, pixel shader logic is included in thread execution logic 2050. In some examples, an application can bypass the rasterizer and depth test component 2073 and access un-rasterized vertex data via a stream out unit 2023.

The graphics processor 2000 has an interconnect bus, interconnect fabric, or some other interconnect mechanism that allows data and message passing amongst the major components of the processor. In some examples, execution units 2052A-2052B and associated logic units (e.g., L1 cache 2051, sampler 2054, texture cache 2058, etc.) interconnect via a data port 2056 to perform memory access and communicate with render output pipeline components of the processor. In some examples, sampler 2054, caches 2051, 2058 and execution units 2052A-2052B each have separate memory access paths. In some examples the texture cache 2058 can also be configured as a sampler cache.

In some examples, render output pipeline 2070 contains a rasterizer and depth test component 2073 that converts vertex-based objects into an associated pixel-based representation. In some examples, the rasterizer logic includes a windower/masker unit to perform fixed function triangle and line rasterization. An associated render cache 2078 and depth cache 2079 are also available in some examples. A pixel operations component 2077 performs pixel-based operations on the data, though in some instances, pixel operations associated with 2D operations (e.g. bit block image transfers with blending) are performed by the 2D engine 2041, or substituted at display time by the display controller 2043 using overlay display planes. In some examples, a shared L3 cache 2075 is available to all graphics components, allowing the sharing of data without the use of main system memory.

In some examples, media pipeline 2030 includes a media engine 2037 and a video front-end 2034. In some examples, video front-end 2034 receives pipeline commands from the command streamer 2003. In some examples, media pipeline 2030 includes a separate command streamer. In some examples, video front-end 2034 processes media commands before sending the command to the media engine 2037. In some examples, media engine 2037 includes thread spawning functionality to spawn threads for dispatch to thread execution logic 2050 via thread dispatcher 2031.

In some examples, graphics processor 2000 includes a display engine 2040. In some examples, display engine 2040 is external to graphics processor 2000 and couples with the graphics processor via the ring interconnect 2002, or some other interconnect bus or fabric. In some examples, display engine 2040 includes a 2D engine 2041 and a display controller 2043. In some examples, display engine 2040 contains special purpose logic capable of operating independently of the 3D pipeline. In some examples, display controller 2043 couples with a display device (not shown), which may be a system integrated display device, as in a laptop computer, or an external display device attached via a display device connector.

In some examples, the geometry pipeline 2020 and media pipeline 2030 are configurable to perform operations based on multiple graphics and media programming interfaces and are not specific to any one application programming interface (API). In some examples, driver software for the graphics processor translates API calls that are specific to a particular graphics or media library into commands that can be processed by the graphics processor. In some examples, support is provided for the Open Graphics Library (OpenGL), Open Computing Language (OpenCL), and/or Vulkan graphics and compute API, all from the Khronos Group. In some examples, support may also be provided for the Direct3D library from the Microsoft Corporation. In some examples, a combination of these libraries may be supported. Support may also be provided for the Open Source Computer Vision Library (OpenCV). A future API with a compatible 3D pipeline would also be supported if a mapping can be made from the pipeline of the future API to the pipeline of the graphics processor.

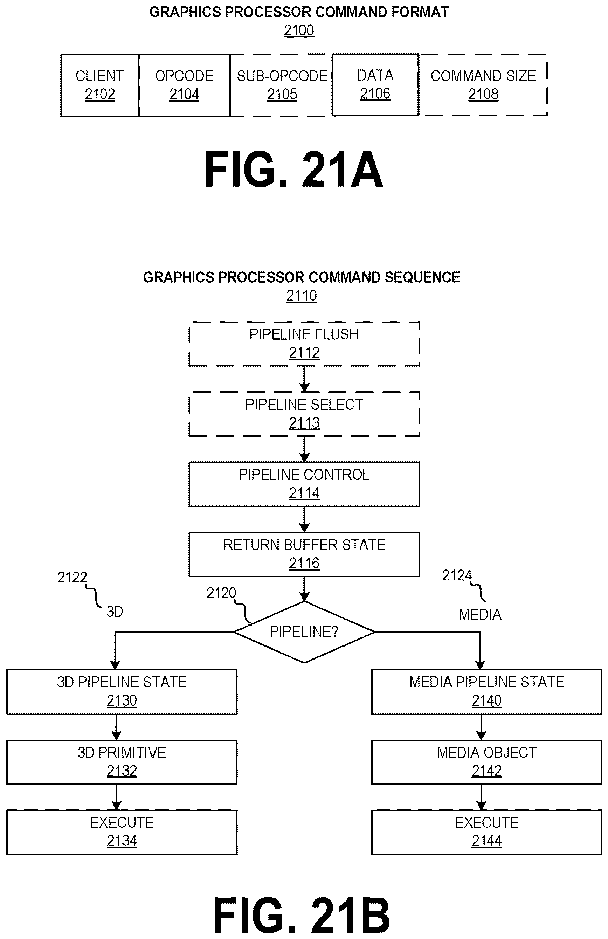

FIG. 21A is a block diagram illustrating a graphics processor command format 2100 according to some examples. FIG. 21B is a block diagram illustrating a graphics processor command sequence 2110 according to an example. The solid lined boxes in FIG. 21A illustrate the components that are generally included in a graphics command while the dashed lines include components that are optional or that are only included in a sub-set of the graphics commands. The graphics processor command format 2100 of FIG. 21A includes data fields to identify a client 2102, a command operation code (opcode) 2104, and data 2106 for the command. A sub-opcode 2105 and a command size 2108 are also included in some commands.

In some examples, client 2102 specifies the client unit of the graphics device that processes the command data. In some examples, a graphics processor command parser examines the client field of each command to condition the further processing of the command and route the command data to the appropriate client unit. In some examples, the graphics processor client units include a memory interface unit, a render unit, a 2D unit, a 3D unit, and a media unit. Each client unit has a corresponding processing pipeline that processes the commands. Once the command is received by the client unit, the client unit reads the opcode 2104 and, if present, sub-opcode 2105 to determine the operation to perform. The client unit performs the command using information in data field 2106. For some commands an explicit command size 2108 is expected to specify the size of the command. In some examples, the command parser automatically determines the size of at least some of the commands based on the command opcode. In some examples commands are aligned via multiples of a double word. Other command formats can be used.

The flow diagram in FIG. 21B illustrates a graphics processor command sequence 2110. In some examples, software or firmware of a data processing system that features an example of a graphics processor uses a version of the command sequence shown to set up, execute, and terminate a set of graphics operations. A sample command sequence is shown and described for purposes of example only as examples are not limited to these specific commands or to this command sequence. Moreover, the commands may be issued as batch of commands in a command sequence, such that the graphics processor will process the sequence of commands in at least partially concurrence.

In some examples, the graphics processor command sequence 2110 may begin with a pipeline flush command 2112 to cause any active graphics pipeline to complete the currently pending commands for the pipeline. In some examples, the 3D pipeline 2122 and the media pipeline 2124 do not operate concurrently. The pipeline flush is performed to cause the active graphics pipeline to complete any pending commands. In response to a pipeline flush, the command parser for the graphics processor will pause command processing until the active drawing engines complete pending operations and the relevant read caches are invalidated. Optionally, any data in the render cache that is marked 'dirty' can be flushed to memory. In some examples, pipeline flush command 2112 can be used for pipeline synchronization or before placing the graphics processor into a low power state.

In some examples, a pipeline select command 2113 is used when a command sequence requires the graphics processor to explicitly switch between pipelines. In some examples, a pipeline select command 2113 is required only once within an execution context before issuing pipeline commands unless the context is to issue commands for both pipelines. In some examples, a pipeline flush command 2112 is required immediately before a pipeline switch via the pipeline select command 2113.

In some examples, a pipeline control command 2114 configures a graphics pipeline for operation and is used to program the 3D pipeline 2122 and the media pipeline 2124. In some examples, pipeline control command 2114 configures the pipeline state for the active pipeline. In some examples, the pipeline control command 2114 is used for pipeline synchronization and to clear data from one or more cache memories within the active pipeline before processing a batch of commands.

In some examples, return buffer state commands 2116 are used to configure a set of return buffers for the respective pipelines to write data. Some pipeline operations require the allocation, selection, or configuration of one or more return buffers into which the operations write intermediate data during processing. In some examples, the graphics processor also uses one or more return buffers to store output data and to perform cross thread communication. In some examples, the return buffer state includes selecting the size and number of return buffers to use for a set of pipeline operations.

The remaining commands in the command sequence differ based on the active pipeline for operations. Based on a pipeline determination 2120, the command sequence is tailored to the 3D pipeline 2122 beginning with the 3D pipeline state 2130 or the media pipeline 2124 beginning at the media pipeline state 2140.

The commands to configure the 3D pipeline state 2130 include 3D state setting commands for vertex buffer state, vertex element state, constant color state, depth buffer state, and other state variables that are to be configured before 3D primitive commands are processed. The values of these commands are determined at least in part based on the particular 3D API in use. In some examples, 3D pipeline state 2130 commands are also able to selectively disable or bypass certain pipeline elements if those elements will not be used.

In some examples, 3D primitive 2132 command is used to submit 3D primitives to be processed by the 3D pipeline. Commands and associated parameters that are passed to the graphics processor via the 3D primitive 2132 command are forwarded to the vertex fetch function in the graphics pipeline. The vertex fetch function uses the 3D primitive 2132 command data to generate vertex data structures. The vertex data structures are stored in one or more return buffers. In some examples, 3D primitive 2132 command is used to perform vertex operations on 3D primitives via vertex shaders. To process vertex shaders, 3D pipeline 2122 dispatches shader execution threads to graphics processor execution units.

In some examples, 3D pipeline 2122 is triggered via an execute 2134 command or event. In some examples, a register write triggers command execution. In some examples execution is triggered via a 'go' or 'kick' command in the command sequence. In some examples, command execution is triggered using a pipeline synchronization command to flush the command sequence through the graphics pipeline. The 3D pipeline will perform geometry processing for the 3D primitives. Once operations are complete, the resulting geometric objects are rasterized and the pixel engine colors the resulting pixels. Additional commands to control pixel shading and pixel back end operations may also be included for those operations.

In some examples, the graphics processor command sequence 2110 follows the media pipeline 2124 path when performing media operations. In general, the specific use and manner of programming for the media pipeline 2124 depends on the media or compute operations to be performed. Specific media decode operations may be offloaded to the media pipeline during media decode. In some examples, the media pipeline can also be bypassed and media decode can be performed in whole or in part using resources provided by one or more general-purpose processing cores. In some examples, the media pipeline also includes elements for general-purpose graphics processor unit (GPGPU) operations, where the graphics processor is used to perform SIMD vector operations using computational shader programs that are not explicitly related to the rendering of graphics primitives.

In some examples, media pipeline 2124 is configured in a similar manner as the 3D pipeline 2122. A set of commands to configure the media pipeline state 2140 are dispatched or placed into a command queue before the media object commands 2142. In some examples, commands for the media pipeline state 2140 include data to configure the media pipeline elements that will be used to process the media objects. This includes data to configure the video decode and video encode logic within the media pipeline, such as encode or decode format. In some examples, commands for the media pipeline state 2140 also support the use of one or more pointers to "indirect" state elements that contain a batch of state settings.

In some examples, media object commands 2142 supply pointers to media objects for processing by the media pipeline. The media objects include memory buffers containing video data to be processed. In some examples, all media pipeline states must be valid before issuing a media object command 2142. Once the pipeline state is configured and media object commands 2142 are queued, the media pipeline 2124 is triggered via an execute command 2144 or an equivalent execute event (e.g., register write). Output from media pipeline 2124 may then be post processed by operations provided by the 3D pipeline 2122 or the media pipeline 2124. In some examples, GPGPU operations are configured and executed in a similar manner as media operations.

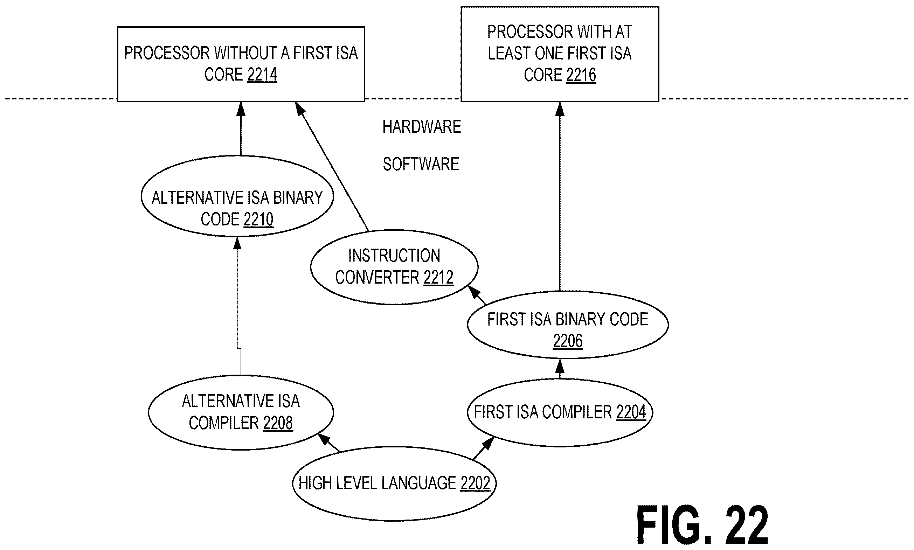

FIG. 22 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 22 shows a program in a high-level language 2202 that may be compiled using a first ISA compiler 2204 to generate first ISA binary code 2206 that may be natively executed by a processor with at least one first ISA core 2216. The processor with at least one first ISA core 2216 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 2204 represents a compiler that is operable to generate first ISA binary code 2206 (e.g., object code) that can, with or without additional linkage processing, be executed on the processor with at least one first ISA core 2216. Similarly, FIG. 22 shows the program in the high-level language 2202 may be compiled using an alternative ISA compiler 2208 to generate alternative ISA binary code 2210 that may be natively executed by a processor without a first ISA core 2214. The instruction converter 2212 is used to convert the first ISA binary code 2206 into code that may be natively executed by the processor without a first ISA core 2214. This converted code is not necessarily to be the same as the alternative ISA binary code 2210; however, the converted code will accomplish the general operation and be made up of instructions from the alternative ISA. Thus, the instruction converter 2212 represents software, firmware, hardware, or a combination thereof that, through emulation, simulation or any other process, allows a processor or other electronic device that does not have a first ISA processor or core to execute the first ISA binary code 2206.

One or more aspects of at least some examples may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the examples described herein.

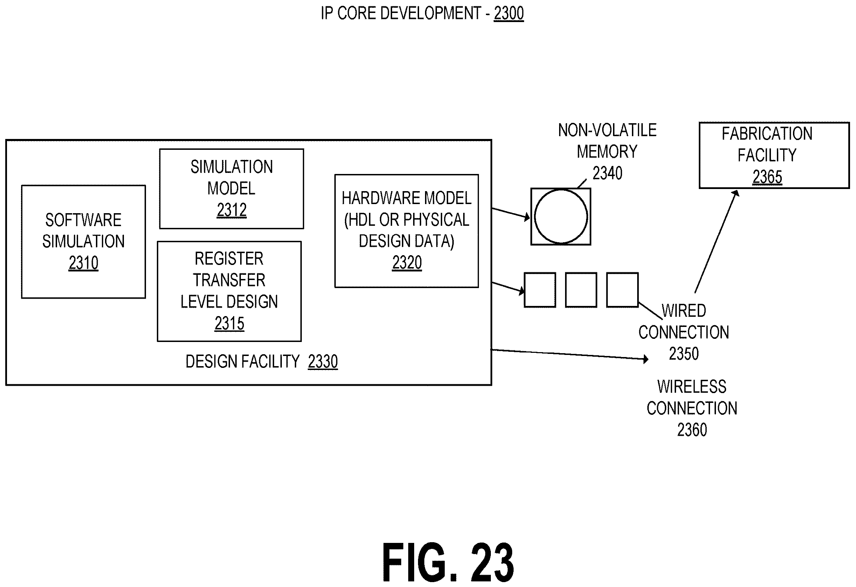

FIG. 23 is a block diagram illustrating an IP core development system 2300 that may be used to manufacture an integrated circuit to perform operations according to some examples. The IP core development system 2300 may be used to generate modular, re-usable designs that can be incorporated into a larger design or used to construct an entire integrated circuit (e.g., an SOC integrated circuit). A design facility 2330 can generate a software simulation 2310 of an IP core design in a high-level programming language (e.g., C/C++). The software simulation 2310 can be used to design, test, and verify the behavior of the IP core using a simulation model 2312. The simulation model 2312 may include functional, behavioral, and/or timing simulations. A register transfer level (RTL) design 2315 can then be created or synthesized from the simulation model 2312. The RTL design 2315 is an abstraction of the behavior of the integrated circuit that models the flow of digital signals between hardware registers, including the associated logic performed using the modeled digital signals. In addition to an RTL design 2315, lower-level designs at the logic level or transistor level may also be created, designed, or synthesized. Thus, the particular details of the initial design and simulation may vary.

The RTL design 2315 or equivalent may be further synthesized by the design facility into a hardware model 2320, which may be in a hardware description language (HDL), or some other representation of physical design data. The HDL may be further simulated or tested to verify the IP core design. The IP core design can be stored for delivery to a fabrication facility 2365 using non-volatile memory 2340 (e.g., hard disk, flash memory, or any non-volatile storage medium). Alternatively, the IP core design may be transmitted (e.g., via the Internet) over a wired connection 2350 or wireless connection 2360. The fabrication facility 2365 may then fabricate an integrated circuit that is based at least in part on the IP core design. The fabricated integrated circuit can be configured to perform operations in accordance with at least some examples described herein.

### Examples

Illustrative examples of the technologies disclosed herein are provided below. An embodiment of the technologies may include any one or more, and any compatible combination of, the examples described below.

Example 1 is a processor apparatus that includes a plurality of processing cores, a memory circuit to store power management code, and a power management control (PMC) circuit that is to execute the power management code to manage power consumption of the processing cores based on a processor power limit value (PPLV). The PMC circuit is to control the PPL V based on a system power value corresponding to power consumed by a compute platform that includes the processor apparatus and at least one additional system platform component.

Example 2 includes the subject matter of example 1, and wherein the PMC circuit is configured to be coupled with a power monitor circuit to receive a first system power threshold breach count based on how often the system power value breaches a first system power threshold.

Example 3 includes the subject matter of any of examples 1-2, and wherein the PMC circuit is configured to control the processor power limit based on the first system power threshold breach count.

Example 4 includes the subject matter of any of examples 1-3, and wherein the PMC circuit is configured to control the processor power limit based on a first system power threshold breach rate that is based on the first system power threshold breach count.

Example 5 includes the subject matter of any of examples 1-4, and wherein the first system power breach rate is a moving average of the first system power threshold breach count.

Example 6 includes the subject matter of any of examples 1-5, and wherein the power monitor circuit is to provide a second system power threshold breach count based on how often the system power value breaches a second system power threshold.

Example 7 includes the subject matter of any of examples 1-6, and wherein the PMC circuit is configured to control the processor power limit based on the first and second system power threshold breach counts.

Example 8 includes the subject matter of any of examples 1-7, and wherein the PMC circuit is configured to control the processor power limit based on the first system power threshold breach rate and on a second system power threshold breach rate that is based on the second system power threshold breach count.

Example 9 includes the subject matter of any of examples 1-8, and wherein the PMC circuit is configured to control the processor power limit to cause the first system power threshold breach rate to be higher than the second power threshold breach rate for at least one operational mode.

Example 10 is a system that includes a power source, a compute platform including a processor, and a power delivery (PD) module coupled to the DC supply source and to the compute platform to control one or more supply voltages provided to the compute platform. The processor is to control a processor power limit based on information from the PD module indicating a system power value consumed by the compute platform.

Example 11 includes the subject matter of example 10, and comprises a sensor coupled to the PD module to obtain the system power information.

Example 12 includes the subject matter of any of examples 10-11, and wherein the PD module includes a power monitor circuit to provide a first system power threshold breach count based on how often the system power value breaches a first system power threshold.

Example 13 includes the subject matter of any of examples 10-12, and wherein the processor is configured to control the processor power limit based on the first system power threshold breach count.

Example 14 includes the subject matter of any of examples 10-13, and wherein the processor is configured to control the processor power limit based on a first system power threshold breach rate that is based on the first system power threshold breach count.

Example 15 includes the subject matter of any of examples 10-14, and wherein the first system power breach rate is a moving average of the first system power threshold breach count.

Example 16 includes the subject matter of any of examples 10-15, and wherein the power monitor circuit is configured to provide a second system power threshold breach count based on how often the system power value breaches a second system power threshold.

Example 17 includes the subject matter of any of examples 10-16, and wherein the processor controls the processor power limit based on the first and second system power threshold breach counts.

Example 18 includes the subject matter of any of examples 10-17, and wherein the processor is configured to control the processor power limit based on the first system power threshold breach rate and on a second system power threshold breach rate that is based on the second system power threshold breach count.

Example 19 includes the subject matter of any of examples 10-18, and wherein the processor is configured to control the processor power limit to cause the first system power threshold breach rate to be higher than the second power threshold breach rate for at least one operational mode.

Example 20 is a non-transitory computer readable storage medium apparatus that includes instructions that when executed in a processor that is part of a compute platform cause it to perform a method. The method includes: setting a first system power threshold, receiving a system power value for the compute platform, and managing power consumed by the processor by controlling a processor power limit value (PPLV) based on a first system power threshold breach rate that corresponds to how often the system power value goes above the first system power threshold.

Example 21 includes the subject matter of example 20, and comprises: setting a first system power threshold; and controlling the PPLV based on the first system power threshold breach rate and a second system power threshold breach rate that corresponds to how often the system power value goes above the second system power threshold.

Example 22 includes the subject matter of any of examples 20-21, and comprises controlling the PPLV to cause the first system power threshold breach rate to be higher than the second power threshold breach rate for at least one operational mode.

Example 23 includes the subject matter of any of examples 20-22, and comprises increasing the PPLV responsive to the first system power threshold breach rate exceeding the second system power threshold breach rate, and the second system power threshold breach rate not exceeding a second system power threshold breach rate limit.

Example 24 includes the subject matter of any of examples 20-23, and wherein the at least one operational mode includes a bursty workload mode.

Example 25 includes the subject matter of any of examples 20-24, and wherein the PPLV is a Platform Level 4 (PL4) power limit.

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included.

Throughout the specification, and in the claims, the term "connected" means a direct connection, such as electrical, mechanical, or magnetic connection between the things that are connected, without any intermediary devices.

The term "coupled" means a direct or indirect connection, such as a direct electrical, mechanical, or magnetic connection between the things that are connected or an indirect connection, through one or more passive or active intermediary devices.

The term "circuit" or "module" may refer to one or more passive and/or active components that are arranged to cooperate with one another to provide a desired function. It should be appreciated that different circuits or modules may consist of separate components, they may include both distinct and shared components, or they may consist of the same components. For example, A controller circuit may be a first circuit for performing a first function, and at the same time, it may be a second controller circuit for performing a second function, related or not related to the first function.

The meaning of "in" includes "in" and "on" unless expressly distinguished for a specific description.

The terms "substantially," "close," "approximately," "near," and "about," unless otherwise indicated, generally refer to being within +/-10% of a target value.

Unless otherwise specified, the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner

For the purposes of the present disclosure, phrases "A and/or B" and "A or B" mean (A), (B), or (A and B). For the purposes of the present disclosure, the phrase "A, B, and/or C" means (A), (B), (C), (A and B), (A and C), (B and C), or (A, B and C).

It is pointed out that those elements of the figures having the same reference numbers (or names) as the elements of any other figure can operate or function in any manner similar to that described but are not limited to such.

As defined herein, the term "computer readable storage medium" means a storage medium that contains or stores program code for use by or in connection with an instruction execution system, apparatus, or device. As defined herein, a "computer readable storage medium" is not a transitory, propagating signal per se. A computer readable storage medium may be, but is not limited to, an electronic storage device, a magnetic storage device, an optical storage device, an electromagnetic storage device, a semiconductor storage device, or any suitable combination of the foregoing. Memory elements, as described herein, are examples of a computer readable storage medium.

As defined herein, the term "processor" means at least one hardware circuit configured to carry out instructions contained in program code. The hardware circuit may be implemented with one or more integrated circuits. Examples of a processor include, but are not limited to, a central processing unit (CPU), an array processor, a vector processor, a digital signal processor (DSP), a field-programmable gate array (FPGA), a programmable logic array (PLA), an application specific integrated circuit (ASIC), programmable logic circuitry, a graphics processing unit (GPU), a controller, and so forth. It should be appreciated that a logical processor, on the other hand, is a processing abstraction associated with a core, for example when one or more SMT cores are being used such that multiple logical processors may be associated with a given core, for example, in the context of core thread assignment.

It should be appreciated that a processor or processor system may be implemented in various different manners. For example, it may be implemented on a single die, multiple dies (dielets, chiplets), one or more dies in a common package, or one or more dies in multiple packages. Along these lines, some of these blocks may be located separately on different dies or together on two or more different dies.

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

While the flow diagrams in the figures show a particular order of operations performed by certain embodiments of the invention, it should be understood that such order is exemplary (e.g., alternative embodiments may perform the operations in a different order, combine certain operations, overlap certain operations, etc.).

While the invention has been described in terms of several embodiments, those skilled in the art will recognize that the invention is not limited to the embodiments described, can be practiced with modification and alteration within the spirit and scope of the appended claims. The description is thus to be regarded as illustrative instead of limiting.

## Claims

1. A processor apparatus, comprising:
a plurality of processing cores;
a memory circuit to store power management code; and
a power management control (PMC) circuit to execute the power management code to manage power consumption of the processing cores based on a processor power limit value (PPLV), wherein the PMC circuit is to control the PPLV based on a system power value corresponding to power consumed by a compute platform that includes the processor apparatus and at least one additional system platform component.

2. The apparatus of claim 1, wherein the PMC circuit is to receive, from a power monitor circuit, a first system power threshold breach count based on how often the system power value breaches a first system power threshold.

3. The apparatus of claim 2, wherein the PMC circuit is configured to control the processor power limit based on the first system power threshold breach count.

4. The apparatus of claim 3, wherein the PMC circuit is configured to control the processor power limit based on a first system power threshold breach rate that is based on the first system power threshold breach count.

5. The apparatus of claim 4, wherein the first system power breach rate is a moving average of the first system power threshold breach count.

6. The apparatus of any of claims 3-5, wherein the power monitor circuit is to provide a second system power threshold breach count based on how often the system power value breaches a second system power threshold.

7. The apparatus of claim 6, wherein the PMC circuit is configured to control the processor power limit based on the first and second system power threshold breach counts.

8. The apparatus of claim 7, wherein the PMC circuit is configured to control the processor power limit based on a first system power threshold breach rate that is based on the first system power threshold breach count and on a second system power threshold breach rate that is based on the second system power threshold breach count.

9. The apparatus of claim 8, wherein the PMC circuit is configured to control the processor power limit to cause the first system power threshold breach rate to be higher than the second power threshold breach rate for at least one operational mode.

10. A non-transitory computer readable storage medium apparatus including instructions that when executed in a processor that is part of a compute platform cause the processor to perform a method comprising:
setting a first system power threshold;
receiving a system power value for the compute platform; and
managing power consumed by the processor by controlling a processor power limit value (PPLV) based on a first system power threshold breach rate that corresponds to how often the system power value goes above the first system power threshold.

11. The apparatus of claim 10, comprising:
setting a first system power threshold; and
controlling the PPLV based on the first system power threshold breach rate and a second system power threshold breach rate that corresponds to how often the system power value goes above the second system power threshold.

12. The apparatus of claim 11, comprising controlling the PPLV to cause the first system power threshold breach rate to be higher than the second power threshold breach rate for at least one operational mode.

13. The apparatus of claim 12, comprising increasing the PPLV responsive to the first system power threshold breach rate exceeding the second system power threshold breach rate, and the second system power threshold breach rate not exceeding a second system power threshold breach rate limit.

14. The apparatus of claim 12, comprising increasing the PPLV responsive to the first system power threshold breach rate exceeding the second system power threshold breach rate, and the second system power threshold breach rate not exceeding a second system power threshold breach rate limit.

15. The apparatus of any of claims 12-14, wherein the at least one operational mode includes a bursty workload mode.
